# EUROPEAN PATENT APPLICATION

(11) **EP 4 711 678 A1**
(43) Date of publication of application: **18.03.2026**
(21) Application number: 25201272.9
(22) Date of filing: 10.09.2025
(51) Int. Cl.: F24C 7/08, F24C 15/20

(54) **COOKING APPARATUS**

(30) Priority: 11.09.2024 KR 20240124178
(71) Applicant: LG Electronics Inc., Yeongdeungpo-gu Seoul 07336 (KR)
(72) Inventor: LEE, Soochan, Seoul (KR); PARK, Kyoungjoon, Seoul (KR); YANG, Jaekyung, Seoul (KR); SHIN, Myeongjun, Seoul (KR)
(74) Representative: Vossius & Partner Patentanwälte Rechtsanwälte mbB

(57) **Abstract**

A cooking apparatus according to an embodiment of the present disclosure includes: a cavity defining a cooking chamber therein; a heater unit configured to generate heat to be supplied to the cooking chamber; a casing covering at least a portion of the cavity to define a space between the cavity and the casing; and a gas sensing module mounted in the space between the cavity and the casing and configured to sense gas generated in the cooking chamber, wherein the cavity further comprises an exhaust portion for exhausting the gas in the cooking chamber to an outside of the cavity.

## Description

### BACKGROUND OF THE INVENTION

### 1. Field of the invention

The following description relates to a cooking apparatus, and more particularly to a cooking apparatus including a gas sensor.

### 2. Description of the Related Art

Various products, such as a microwave oven using microwaves, an oven using a heater, a cooktop, etc., are widely used as cooking apparatuses.

The microwave oven heats food by emitting microwaves, generated by a magnetron, into a sealed cooking chamber to vibrate water molecules in food placed in the cooking chamber, and the oven heats food placed in a cooking chamber by heating the sealed cooking chamber using a heater.

As functions of the cooking apparatus become diversified, development of the cooking apparatus is underway in which a single cooking apparatus performs two or more functions that were performed separately by two or more existing cooking appliances.

A light wave oven is being developed in which an optical heater configured to emit light and radiant heat is used as a heater for heating food, and the oven is turned on after food is placed on a rack with an exposed top so that the light and radiant heat may be absorbed by the food.

For convenience of users, an imaging module captures an image of food when the food is placed in a cooking chamber of the oven, and the oven determines the type, weight, and position of the food based on the captured image and automatically performs cooking by using a method suitable for the food.

A gas sensor is used in order to detect gas generated in the cooking chamber, but accurate gas measurement is difficult to achieve due to oil mist contained in the gas to be measured, and temperature of the cooking apparatus is high due to characteristics of the cooking apparatus, thereby causing a problem in reliability of the gas sensor.

Particularly, European Patent No. EP 2741011 A1 (related art 1) discloses a controlling method using a sensor array (oxygen sensor, nitrogen sensor, humidity sensor, and temperature sensor) provided in a cooking chamber. The method includes determining whether cooking is complete by recording a signal curve to determine a remaining cooking time, and storing the curve information in a storage.

However, in related art 1, cooking time and cooked state are determined by direct measurement with various types of sensors provided in the cooking chamber, but molecular weights of odorous molecules are different such that it is difficult to increase the accuracy of measurement if measurement is performed at one location, and it is difficult to maintain the temperature of sensors within an allowable temperature range, thereby causing a problem in reliability of the sensors.

Korean Laid-open Patent Publication No. 10-2022-0153892 (Related art 2) discloses a method of determining an overcooked state of food by using a CO sensor, in which the method measures gas discharged from a duct in order to be applied to an oven. However, in related art 2, accurate measurement is difficult to achieve due to vapor and oil mist introduced into the CO sensor, and reliability of the sensor cannot be ensured due to high temperature.

### PRIOR ART DOCUMENT

### Patent Documents

Patent document 1: EP 2741011 A1
Patent document 2: Korean Laid-open Patent Publication No. 10-2022-0153892

### SUMMARY OF THE INVENTION

It is an objective of the present disclosure to provide a cooking apparatus capable of preventing malfunction of a gas sensor module which occurs when the temperature of the gas sensor module rises beyond an allowable temperature due to heat generated during heating of food.

It is another objective of the present disclosure to provide a cooking apparatus capable of accurate gas sensing by removing oil mist from gas generated in a cooking chamber.

It is yet another objective of the present disclosure to provide a cooking apparatus in which an oil mist remover that removes oil mist and a gas sensor unit have a chamber structure, such that it is possible to easily separate and clean the oil mist remover by separating only the cover.

It is yet another objective of the present disclosure to provide a cooking apparatus capable of preventing malfunction of an imaging module which occurs when the imaging module is heated due to heat generated during heating of food.

It is yet another objective of the present disclosure to provide a cooking apparatus capable of cooling an imaging module and a gas sensor module by sharing a blower fan configured to cool electric or electronic parts, without using a fan that directly cools the imaging module.

It is yet another objective of the present disclosure to provide a cooking apparatus capable of analyzing an image of food and detecting the weight of food to automatically perform cooking by using a method suitable for the type and weight of food.

The objectives of the present disclosure are not limited to the aforementioned objectives and other objectives not described herein will be clearly understood by those skilled in the art from the following description.

In order to achieve the above objectives, a cooking apparatus according to an embodiment of the present disclosure is characterized in that a gas sensing module configured to sense gas generated in a cooking chamber is disposed at an outer portion of a cavity having a cooking chamber formed therein.

Specifically, in accordance with an aspect of the present disclosure, the above and other objectives can be accomplished by providing a cooking apparatus including: a cavity defining a cooking chamber therein; a heater unit configured to generate heat to be supplied to the cooking chamber; a casing covering at least a portion of the cavity to define a space between the cavity and the casing; and a gas sensing module mounted in the space between the cavity and the casing and configured to sense gas generated in the cooking chamber, wherein the cavity further includes an exhaust portion for exhausting the gas in the cooking chamber to an outside of the cavity.

The space between the cavity and the casing may include: an upper flow space between an upper surface of the cavity and the casing; a rear flow space between a rear surface of the cavity and the casing; and a lateral flow space between a lateral surface of the cavity and the casing.

The gas sensing module may be disposed in the lateral flow space.

The casing may further include a base plate disposed at a lower portion of the cavity, wherein the gas sensing module may be coupled to an upper surface of the base plate.

The gas sensing module may be disposed in the upper flow space.

The gas sensing module may be coupled to the upper surface of the cavity.

The gas sensing module may include: an oil mist remover configured to filter oil mist contained in gas discharged from the exhaust portion; and a gas sensor unit configured to detect a type and concentration of gas discharged from the oil mist remover.

The oil mist remover may vertically overlap the exhaust portion.

The oil mist remover may include: an oil mist removal chamber defining a gas flow space therein in which the gas discharged from the exhaust portion flows, and including a plurality of partition walls that reduce velocity and temperature of the gas flowing therein; a first gas inlet through which the gas discharged from the exhaust portion flows into the oil mist removal chamber; and a first gas outlet through which gas is discharged after oil mist is filtered from the gas in the oil mist removal chamber.

The oil mist removal chamber may include: an oil mist chamber body having an opening formed in an upper portion, defining the gas flow space therein, and having the first gas outlet formed in one side thereof; and an oil mist chamber cover covering the opening of the oil mist chamber body, wherein the first gas inlet may be formed in the oil mist chamber cover.

The first gas inlet may vertically overlap the exhaust portion.

The exhaust portion may be disposed above the oil mist remover.

The exhaust portion may have a tube protruding from the lateral surface of the cavity.

The gas sensor unit may include: a sensing chamber defining a sensing space therein in which the gas discharged from the oil mist remover flows; a second gas inlet through which the gas discharged from the oil mist remover flows into the sensing chamber; a second gas outlet through which the gas in the sensing chamber is discharged; and a gas sensor mounted in the sensing space and configured to sense the gas flowing in the sensing space.

The sensing chamber may include: a sensing chamber body having an opening formed in an upper portion, defining the sensing space therein, and having the first gas outlet formed in one side thereof and the second gas outlet formed in an opposite side thereof; and a sensing chamber cover covering the opening of the sensing chamber body.

The gas sensing module may further include a gas pump configured to pump the gas discharged from the oil mist remover and to provide the gas.

In accordance with another aspect of the present disclosure, the above and other objectives can be accomplished by providing a cooking apparatus including: a cavity defining a cooking chamber therein; a heater unit configured to generate heat to be supplied to the cooking chamber; and a gas sensing module configured to sense gas generated in the cooking chamber, wherein the gas sensing module includes: an oil mist remover configured to filter oil mist contained in gas discharged from the cooking chamber; a gas sensor unit configured to detect a type and concentration of gas discharged from the oil mist remover; and a gas pump configured to pump the gas discharged from the oil mist remover and to provide the gas.

The oil mist remover may include: an oil mist removal chamber defining a gas flow space therein in which the gas discharged from the cooking chamber flows, and including a plurality of partition walls that reduce velocity and temperature of the gas flowing therein; a first gas inlet through which the gas discharged from the cooking chamber flows into the oil mist removal chamber; and a first gas outlet through which gas is discharged after oil mist is filtered from the gas in the oil mist removal chamber.

The oil mist removal chamber may include: an oil mist chamber body having an opening formed in an upper portion, defining the gas flow space therein, and having the first gas outlet formed in one side thereof; and an oil mist chamber cover covering the opening of the oil mist chamber body, wherein the first gas inlet may be formed in the oil mist chamber cover.

The gas sensor unit may include: a sensing chamber defining a sensing space therein in which the gas discharged from the oil mist remover flows; a second gas inlet through which the gas discharged from the oil mist remover flows into the sensing chamber; a second gas outlet through which the gas in the sensing chamber is discharged; and a gas sensor mounted in the sensing space and configured to sense the gas flowing in the sensing space.

In accordance with yet another aspect of the present disclosure, the above and other objectives can be accomplished by providing a cooking apparatus including: a cavity defining a cooking chamber therein; a heater unit configured to generate heat to be supplied to the cooking chamber; and a casing covering at least a portion of the cavity to define a space between the cavity and the casing, wherein the cavity further includes an exhaust portion for exhausting gas in the cooking chamber to the space between the cavity and the casing, and a gas sensing module mounted in the space between the cavity and the casing and configured to sense gas discharged from the exhaust portion.

### BRIEF DESCRIPTION OF THE DRAWINGS

FIG. 1 is a perspective view of a cooking apparatus according to an embodiment of the present disclosure.
FIG. 2 is a front view of the cooking apparatus illustrated in FIG. 1.
FIG. 3 is a diagram illustrating the cooking apparatus of FIG. 2 with a door opened.
FIG. 4 is a perspective view of the cooking apparatus of FIG. 1 from which a casing is removed, when viewed from the rear.
FIG. 5 is a top view of the cooking apparatus illustrated in FIG. 4.
FIG. 6 is a cross-sectional view taken along line 6-6' of FIG. 1.
FIG. 7 is an enlarged view of a portion at which an imaging module of FIG. 6 is mounted.
FIG. 8 is an exploded perspective view of the imaging module illustrated in FIG. 6.
FIG. 9 is a perspective view of the cooking apparatus of FIG. 4 from which an imaging module and other components are removed.
FIG. 10 is a perspective view of a cooking apparatus according to another embodiment of the present disclosure.
FIG. 11 is a perspective view of the periphery of an air guide illustrated in FIG. 10.
FIG. 12 is a cross-sectional view taken along line 12-12' of FIG. 10.
FIG. 13 is a perspective view of the air guide 200 illustrated in FIG. 10.
FIG. 14 is a cross-sectional view of a cooking apparatus according to yet another embodiment of the present disclosure.
FIG. 15 is a cross-sectional view of a cooking apparatus according to yet another embodiment of the present disclosure.
FIG. 16 is a top view of a cooking apparatus from which a cabinet is removed, according to yet another embodiment of the present disclosure.
FIG. 17 is a perspective view of a cooking apparatus from which a portion of a casing is removed, according to yet another embodiment of the present disclosure.
FIG. 18 is an enlarged view of the periphery of a gas sensing module illustrated in FIG. 17.
FIG. 19 is a diagram illustrating the configuration of the gas sensing module illustrated in FIG. 17.
FIG. 20A is a perspective view of an oil mist remover illustrated in FIG. 19.
FIG. 20B is an exploded perspective view of an oil mist remover illustrated in FIG. 20A.
FIG. 20C is a cross-sectional perspective view of an oil mist remover illustrated in FIG. 20A.
FIG. 21A is an exploded perspective view of a gas sensor unit illustrated in FIG. 19.
FIG. 21B is a cross-sectional perspective view of a sensing chamber body illustrated in FIG. 21A.
FIG. 22 is a perspective view of a cooking apparatus from which a portion of a casing is removed, according to yet another embodiment of the present disclosure.
FIG. 23 is a block diagram illustrating a control configuration of a cooking apparatus according to an embodiment of the present disclosure.

### DETAILED DESCRIPTION OF THE PREFERRED EMBODIMENTS

Advantages and features of the present invention and methods for achieving those of the present invention will become apparent upon referring to embodiments described later in detail with reference to the attached drawings. However, embodiments are not limited to the embodiments disclosed hereinafter and may be embodied in different ways. The embodiments are provided for perfection of disclosure and for informing persons skilled in this field of art of the scope of the present invention. The same reference numerals may refer to the same elements throughout the specification.

Spatially-relative terms such as "below," "beneath," "lower," "above," or "upper" may be used herein to describe one element's relationship to another element as illustrated in the Figures. It will be understood that spatially-relative terms are intended to encompass different orientations of the device in addition to the orientation depicted in the Figures. For example, if the device in one of the figures is turned over, elements described as "below" or "beneath" other elements would then be oriented "above" the other elements. The exemplary terms "below" or "beneath" can, therefore, encompass both an orientation of above and below. Since the device may be oriented in another direction, the spatially-relative terms may be interpreted in accordance with the orientation of the device.

The terminology used in the present disclosure is for the purpose of describing particular embodiments only and is not intended to limit the disclosure. As used in the disclosure and the appended claims, the singular forms "a," "an," and "the" are intended to include the plural forms as well, unless context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, the thickness or size of each layer is exaggerated, omitted, or schematically illustrated for convenience of description and clarity. Also, the size or area of each constituent element does not entirely reflect the actual size thereof.

Hereinafter, exemplary embodiments of the present invention will be described with reference to the accompanying drawings.

Hereinafter, a cooking apparatus 1 according to embodiments of the present disclosure will be described with reference to the accompanying drawings.

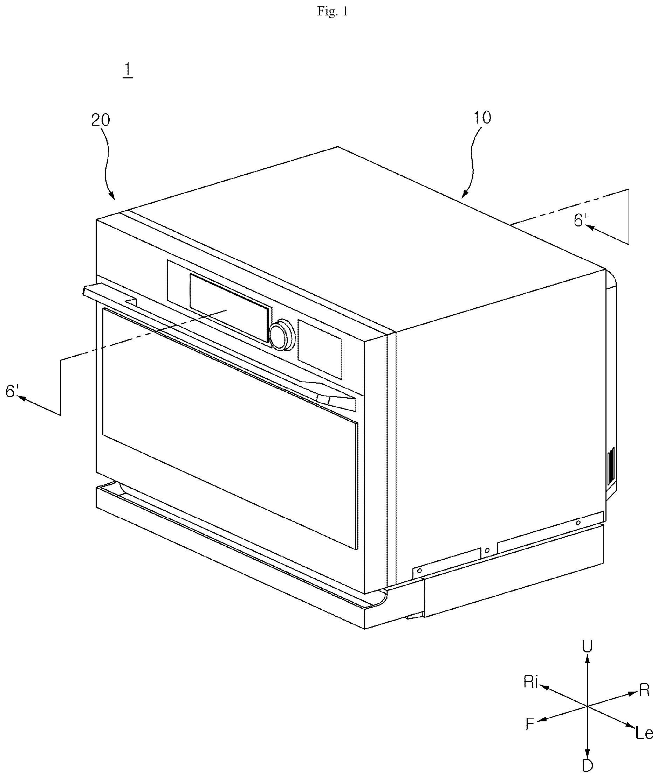

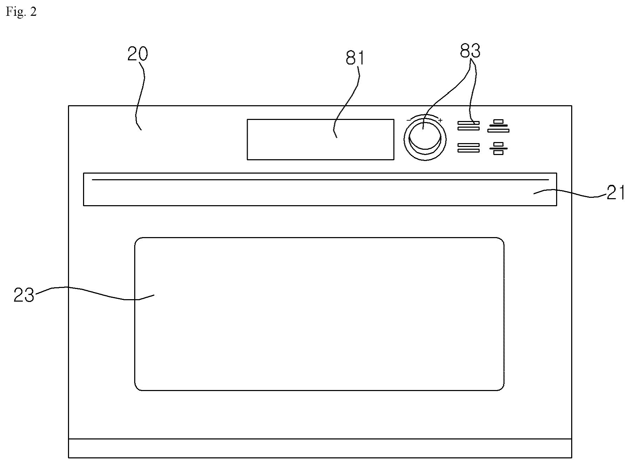

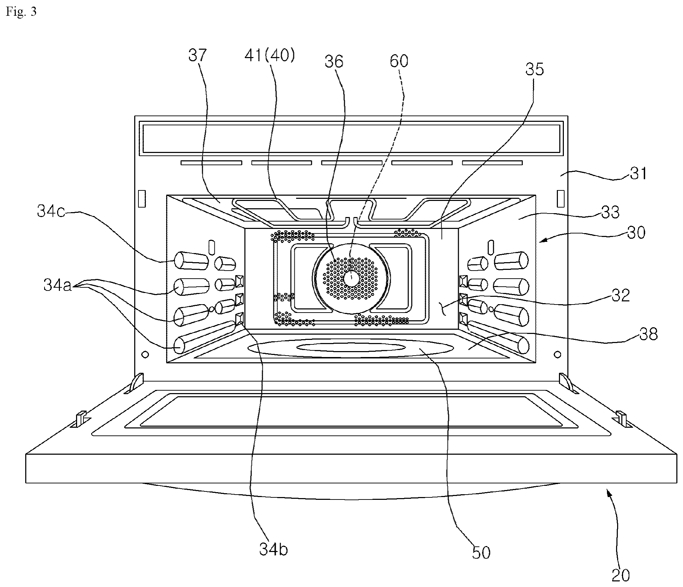

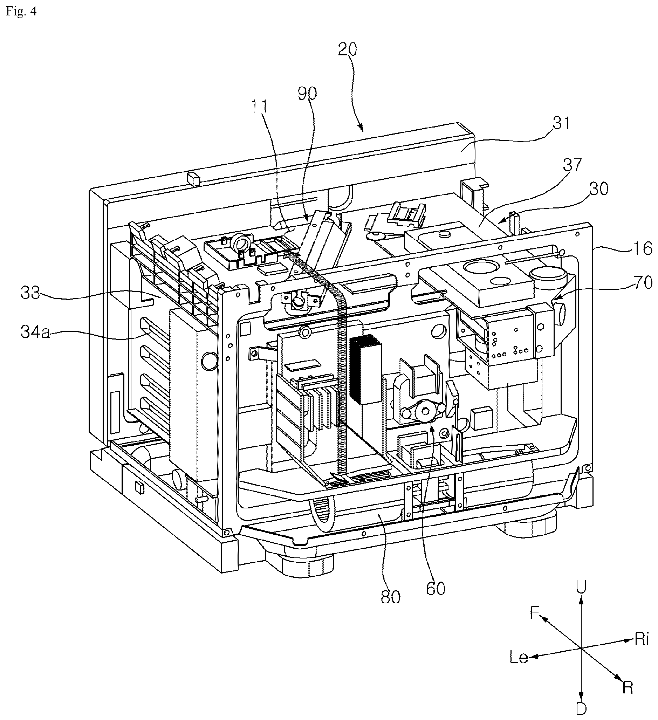

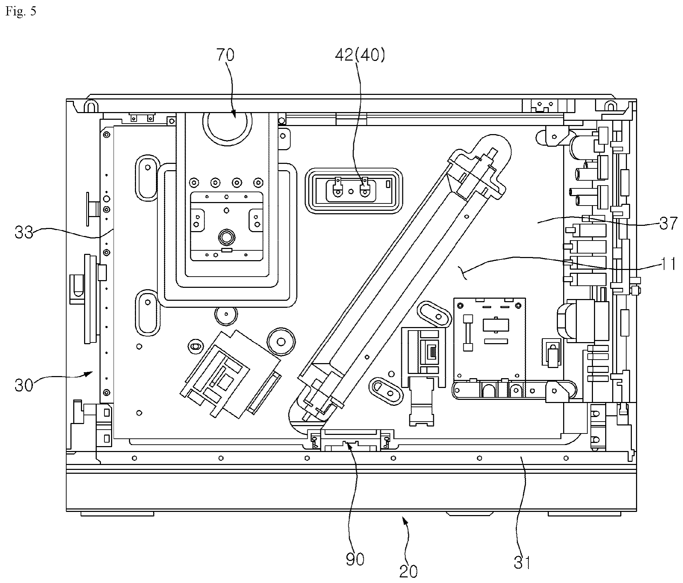

FIG. 1 is a perspective view of a cooking apparatus 1 according to an embodiment of the present disclosure; FIG. 2 is a front view of the cooking apparatus 1 illustrated in FIG. 1; FIG. 3 is a diagram illustrating the cooking apparatus 1 of FIG. 2 with a door opened; FIG. 4 is a perspective view of the cooking apparatus 1 of FIG. 1 from which a casing 10 is removed, when viewed from the rear; and FIG. 5 is a top view of the cooking apparatus 1 illustrated in FIG. 4.

Referring to FIGS. 1 to 5, the cooking apparatus 1 according to an embodiment of the present disclosure includes a casing 10 defining an outer appearance, and a cavity 30 provided inside the casing 10. The casing 10 has an open front surface. The cavity 30 includes a front panel 31 that covers the open front surface of the casing 10.

The cavity 30 defines a cooking chamber 32 therein. The cavity 30 includes a lateral surface 33 defining both left and right sides of the cooking chamber 32, an upper surface 37 defining an upper surface of the cooking chamber 32, a bottom surface 38 defining a lower surface of the cooking chamber 32, and a rear surface 35 defining a rear surface of the cooking chamber 32. The cavity 30 has an open front surface. Food may be inserted through the open front surface of the cavity 30.

The cooking apparatus 1 according to an embodiment of the present disclosure may also include a sealed grilling chamber (not shown) detachably provided in the cooking chamber 32 of the cavity 30. The sealed grilling chamber slides in the cooking chamber 32 and is detachable from the cavity 30.

The cooking apparatus 1 according to an embodiment of the present disclosure includes a door 20 rotatably mounted to the front panel 31. The door 20 may selectively open or close a front opening of the cavity 30. The door 20 is in close contact with the front panel 31, thereby preventing microwaves and heat emitted into the cooking chamber 32 from leaking to the outside of the cooking chamber 32

The door 20 may include a door handle 21 to allow a user to easily open and close the door 20. The door 20 may include a see-through window 23 to allow a user to see the interior of the cooking chamber 32. The door handle 21 may be positioned above the see-through window 23.

The cooking apparatus 1 includes a controller 130 (not shown) configured to control the operation of various heaters 40, 50, and 60 and a microwave assembly 70 which will be described below, a display unit 81 configured to display operating status thereof, and an input unit 83 configured to receive an operating instruction for the cooking apparatus 1 from a user. The display unit 81 and the input unit 83 may be positioned at an upper portion of the door 20. The display unit 81 and the input unit 83 may be positioned above the door handle 21.

Various heaters 40, 50, and 60 and the microwave assembly 70 may be collectively referred to as a heating unit. The heating unit generates heat for heating the cooking chamber 32.

Upper, lower, left, right, and rear surfaces of the cavity 30 are separated from the casing 10 to form a space, and various electric or electronic parts may be accommodated in the space formed between the cavity 30 and the casing 10. The space between the upper, lower, left, right, and rear surfaces of the cavity 30 and the casing 10 may be defined as an air flow space 11, 14, and 15 in which air flows.

In addition, the cooking apparatus 1 may further include a blower fan 80 configured to blow the air inside the air flow space 11, 14, and 15. The blower fan 80 may provide air for cooling the electric parts disposed in the air flow space 11, 14, and 15.

The cooking apparatus 1 may further include a back plate 16. The back plate 16 may be disposed at the rear of the cavity and may face the front panel 31. An upper end of the back plate 16 may be coupled to the upper surface of the casing 10. A side surface of the back plate 16 may be coupled to the rear surface of the casing 10. The back plate 16 may maintain a separation space between the casing 10 and the cavity 30. The back plate 16 may have a hole through which the air supplied by the blower fan 80 passes.

Specifically, the blower fan 80 may be disposed behind the rear surface 35 of the cavity 30. The blower fan 80 may be disposed in the air flow space 11, 14, and 15 between the rear surface 35 of the cavity 30 and the casing 10.

The blower fan 80 may supply air outside the cavity 30 to an imaging module 90. The air heat-exchanged with the imaging module 90 may be discharged to the outside of the cavity 30.

More specifically, air outside the casing 10 flows into the air flow space 11, 14, and 15 between the rear surface 35 of the cavity 30 and the casing 10 and moves to the air flow space 11, 14, and 15 between the upper surface 37 of the cavity 30 and the casing 10, and after exchanging heat with the electric parts and the imaging module 90, the air moves to the air flow space 11, 14, and 15 between the lateral surface 33 of the cavity 30 and the casing 10 and is discharged to the outside of the casing 10.

Hereinafter, various heaters 40, 50, and 60 and the microwave assembly 70 for heating food will be described.

The cooking apparatus 1 includes an optical heater 40 mounted on the upper surface 37 of the cavity 30. An electrode part 42 of the optical heater 40 is disposed in a space between the upper surface 37 of the cavity 30 and the casing 10 and a heater unit 41 configured to emit light (infrared light) and radiant heat may be disposed below the upper surface 37. The heater unit 41 of the optical heater 40 is disposed below the upper surface 37, and thus is exposed to the cooking chamber 32.

The optical heater 40 may emit radiant heat while emitting light during operation. It may be visually determined whether the optical heater 40 is in operation based on the light generated by the optical heater 40 during operation. In addition, the optical heater 40 may rapidly raise the temperature inside the cooking chamber 32.

It is known that maximum radiant energy in a wavelength range of 1.4 µm to 5 µm (hereinafter also referred to as a "maximum absorption region") may be absorbed by food, such as grains, meat, fish, and the like. Light in a wavelength range of the maximum absorption region may be absorbed more by food, and light in other wavelength range is not absorbed by food but is reflected, such that it is ineffective for cooking food.

The optical heater 40 may be a carbon heater. According to Planck's law, surface temperature in a range of 1100 °C to 1400 °C is required in order to emit light in the wavelength range of 1.4 µm to 5 µm, and the carbon heater may be suitable for use in the temperature range.

The cooking apparatus 1 according to an embodiment of the present disclosure may include the microwave assembly 70 including a magnetron for generating microwaves. The microwave assembly 70 may heat food by using the microwaves emitted by the magnetron. The microwaves emitted by the magnetron may heat food by vibrating water contained in food.

The microwave assembly 70 may be mounted on the upper surface 37 of the cavity 30. The microwave assembly 70 may emit microwaves toward the cooking chamber 32 to heat food accommodated in the cooking chamber 32.

The cooking apparatus 1 according to an embodiment of the present disclosure includes a convection module 60 configured to supply heat to the cooking chamber 32. The convection module 60 may be mounted on the rear surface 35 of the cavity 30, and a blowing port 36, through which heat emitted from the convection module 60 passes, may be formed in the rear surface 35.

The convection module 60 may include: a convection heater (not shown) configured to emit heat; a convection fan (not shown) configured to supply the heat, emitted by the convection heater, into the cooking chamber 32; and a convection motor (not shown) configured to rotate the convection fan.

When the convection heater and the convection motor are activated, air is heated by the heat emitted from the convection heater, and the heated air is supplied into the cooking chamber 32 through the blowing port by the convection fan. The heat supplied by the convection module 60 is transferred by convection to heat the food accommodated in the cooking chamber 32.

The cooking apparatus 1 according to an embodiment of the present disclosure may further include a lower heater 50 disposed on the bottom surface 38 of the cavity 30 and configured to supply heat to the cooking chamber 32 from the lower side. The heat supplied by the lower heater 50 is radiant heat and is provided to the cooking chamber 32.

A guide 34 protruding toward the cooking chamber 32 may be formed on both left and right surfaces 33 of the cavity 30. The sealed grilling chamber may be removably seated on the guide 34. The sealed grilling chamber may slide to be pushed into or pulled out from the cooking chamber 32, and when pushed into the cooking chamber 32, the sealed grilling chamber may be seated on the guide 34.

The guide 34 may be formed as one body with the lateral surface 33 of the cavity 30. The guide 34 may protrude into the cooking chamber 32 by firing the lateral surface 33 during manufacture of the cavity 30.

A pair of guides 34 may be formed at the same height on both left and right sides of the cavity 30. The guide 34 may include a plurality of guides 34 formed at different heights on the lateral surface of the cavity 30.

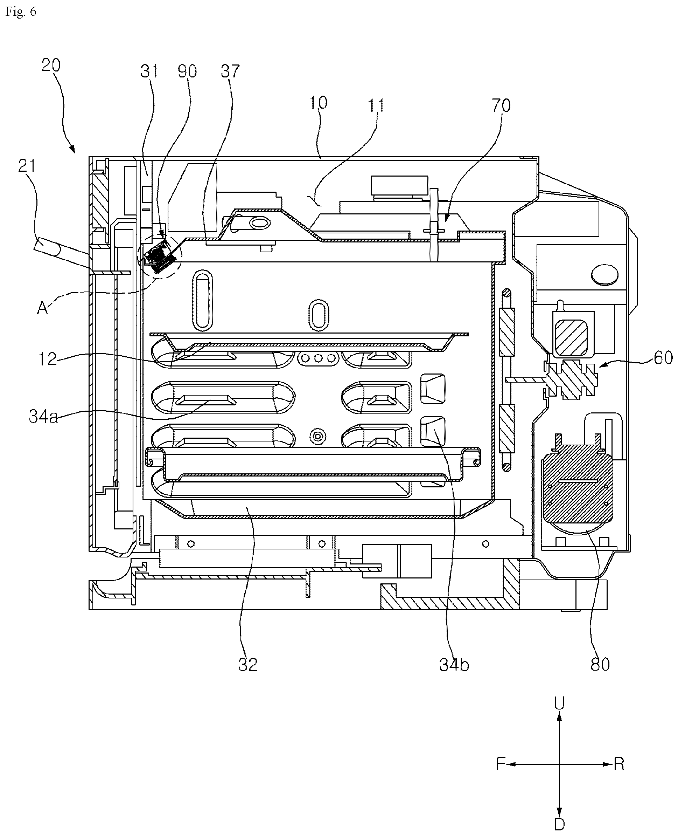

The cooking apparatus 1 may further include a rack 12 (see FIG. 6) on which food is placed, and which is inserted into the cooking chamber 32 to divide the cooking chamber 32.

The guide 34 may include a rack guide 34a supporting the rack 12. The rack guide 34a may include a plurality of rack guides 34a formed at different heights on the lateral surface of the cavity 30, and the plurality of rack guides 34a may be provided in pair on both left and right sides of the cavity 30. The rack guides 34a provided in pair on each of the left and right sides may be formed at the same height.

The rack 12 may be inserted into adjacent guides among the plurality of guides 34 to be pushed into and pulled out from the cooking chamber 32.

The cavity 30 includes a stopper 34b protruding from the lateral surface 33 toward the cooking chamber 32. The stopper 34b may be disposed behind the guide 34 and may be formed between the plurality of guides 34 in a height direction. Accordingly, when the rack 12 is excessively inserted, the stopper 34b may prevent impact applied to the convection module 60 and the like positioned on the rear surface 35 of the cavity 30.

The stopper 34b may protrude toward the cooking chamber 32 by firing the cavity 30 in the same manner as the guide 34.

The guide 34 includes a grilling chamber guide 34c supporting the sealed grilling chamber. The sealed grilling chamber may be removably seated on the grilling chamber guide 34c.

The grilling chamber guide 34c may be located above the rack guide 34a. If a plurality of rack guides 34a are provided, the grilling chamber guide 34c may be located above the rack guide 34a located at an uppermost position. The grilling chamber guide 34c is a guide located uppermost among the plurality of guides 34.

As the grilling chamber guide 34c is located uppermost among the guides 34, the sealed grilling chamber may be disposed close to the optical heater 40.

In addition, the cooking apparatus 1 according to an embodiment of the present disclosure may further include the imaging module 90 configured to capture an image of the interior of the cavity 30.

The imaging module 90 has a viewing angle for capturing an image of the entire interior of the cavity 30, and is disposed so as not to be damaged by the heat inside the cavity 30. The imaging module 90 may be disposed in the air flow spaces 11, 14, and 15 and may be cooled by the air blown by the blower fan 80.

The structure of the imaging module 90 will be described in detail below.

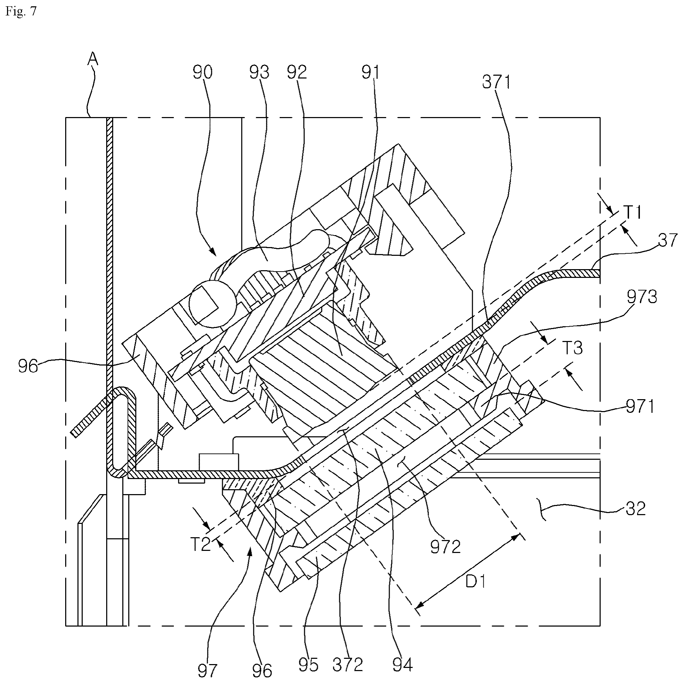

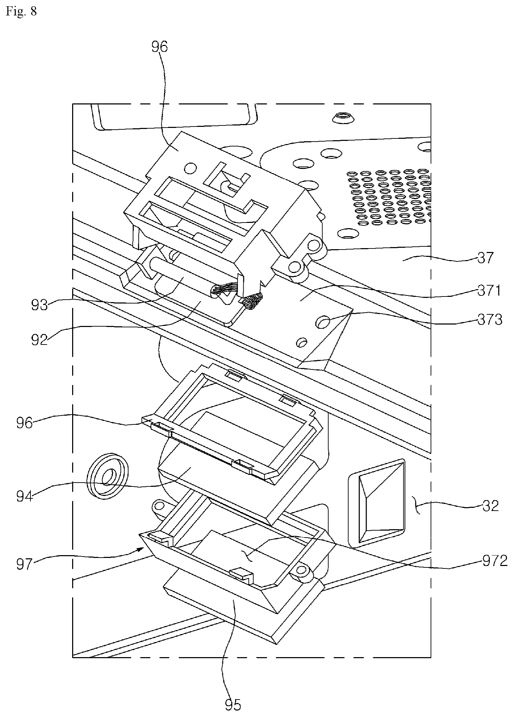

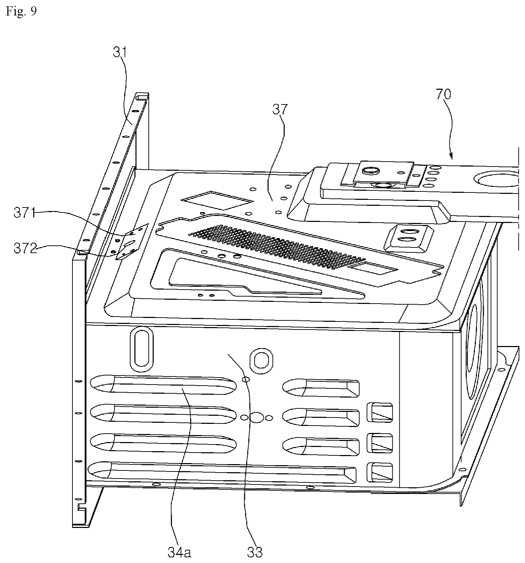

FIG. 6 is a cross-sectional view taken along line 6-6' of FIG. 1; FIG. 7 is an enlarged view of a portion at which the imaging module 90 of FIG. 6 is mounted; FIG. 8 is an exploded perspective view of the imaging module 90 illustrated in FIG. 6; and FIG. 9 is a perspective view of the cooking apparatus 1 of FIG. 4 from which the imaging module 90 and other components are removed.

Referring to FIGS. 6 to 9, the imaging module 90 captures an image of the interior of the cavity 30. The imaging module 90 may have a viewing angle for capturing an image of the entire interior of the cavity 30, and may be disposed at a position where the imaging module 90 may be protected from the heat inside the cavity 30.

The cavity 30 may further include a module mounting portion 371 at which the imaging module 90 is mounted. The module mounting portion 371 may include a camera hole 372 through which light supplied to an image sensor 91 passes which will be described later.

The module mounting portion 371 may be a portion of the upper surface 37 of the cavity 30. The module mounting portion 371 may be formed by bending a portion of the upper surface 37 of the cavity 30. Specifically, the module mounting portion 371 may be an inclined surface that is inclined relative to the upper surface 37 of the cavity 30.

More specifically, the module mounting portion 371 may be inclined upwardly and rearwardly. Preferably, an angle of inclination between the module mounting portion 371 and the upper surface 37 of the cavity 30 may be 20 degrees to 30 degrees.

The module mounting portion 371 may be disposed adjacent to a front end of the upper surface 37 of the cavity 30. In addition, the module mounting portion 371 may be disposed at the center of the upper surface 37 of the cavity 30 in the left-right direction.

When the module mounting portion 371 is disposed adjacent to the front end of the upper surface 37 of the cavity 30 and is inclined upwardly and rearwardly, the image sensor 91 mounted at the module mounting portion 371 diagonally views the inside of the cavity 30, such that a widest viewing angle may be achieved in a limited space of the cavity 30 and it is possible to eliminate a blind spot that occurs when the image sensor 91 is mounted at the door.

The module mounting portion 371 is disposed adjacent to the front end of the upper surface 37 of the cavity 30, thereby reducing interference with the optical heater 40 disposed on the upper surface 37 of the cavity 30, and protecting the imaging module 90 from the heat generated by the optical heater 40.

The camera hole 372 may be formed through the module mounting portion 371. The camera hole 372 may have a circular shape. The camera hole 372 may be disposed at the center of the module mounting portion 371.

The camera hole 372 may have a size that allows light to pass without allowing microwaves to pass, and allows the image sensor 91 to have an appropriate viewing angle. Preferably, a width D1 of the camera hole 372 may be 8 mm to 12 mm. This is because if the width D1 of the camera hole 372 is less than 8 mm, the viewing angle of the image sensor 91 becomes too small, and if the width D1 of the camera hole 372 is greater than 12 mm, the microwaves exit through the camera hole 372.

The imaging module 90 has a structure in which the imaging module 90 may capture an image of the interior of the cavity 30 without a blind spot, and may be protected from the heat generated inside the cavity 30.

For example, the imaging module 90 may include an image sensor 91 and a window 94.

The image sensor 91 is disposed outside the cavity 30 and captures an image of the interior of the cavity 30 through the camera hole 372 formed in the cavity 30. The image captured by the image sensor 91 is transmitted to the controller 130.

The image sensor 91 is a device for sensing information of an object and transforming the information into an electrical image signal. The image sensor 91 may include one of the following: vidicon, plumbicon, Metal-Oxide-Semiconductor (MOS), and Charge-Coupled Device (CCD).

The imaging module 90 may further include a heat sink 93 configured to dissipate the heat from the image sensor 91, and a power supply 92 configured to supply power to the image sensor 91. The power supply 92 may include a printed circuit board. The image sensor 91 may be disposed between the power supply 92 and the camera hole 372.

The heat sink 93 is made of a material having high heat transfer efficiency, such as a metal and the like, and may have a large surface area in contact with air. The heat sink 93 may be in contact with the power supply 92.

The image sensor 91 is disposed outside the cavity 30. The image sensor 91 may be disposed in the air flow space 11, 14, and 15 between the cavity 30 and the casing 10. The image sensor 91 may be spaced apart from the cavity 30, thereby suppressing heat transfer to the image sensor 91 through the cavity 30.

If the image sensor 91 is located too far away from the cavity 30 (camera hole 372), the camera hole 372 is required to have a large width in order to ensure a viewing angle of the image sensor 91, but if the camera hole 372 widens, a problem occurs in that the microwaves exit through the camera hole 372. In addition, if the image sensor 91 is located too close to the cavity 30 (camera hole 372), heat inside the cavity 30 is transferred to the image sensor 91 through the camera hole 372, thereby causing malfunction of the image sensor 91.

Accordingly, in order to solve the above problems, it is preferred that the width of the camera hole 372 is greater than a distance T1 between the camera hole 372 and the image sensor 91. More preferably, the width of the camera hole 372 may be five to six times the distance T1 between the camera hole 372 and the image sensor 91.

The image sensor 91 may overlap the camera hole 372. Specifically, the image sensor 91 may overlap the camera hole 372 in an axial direction Ax of the camera hole 372. Accordingly, light inside the cavity 30 may be accurately detected by the image sensor 91.

The window 94 is disposed inside the cavity 30 to prevent the image sensor 91 from being damaged by various contaminants resulting from food inside the cavity 30, and may have an air gap to reduce heat transferred to the image sensor 91.

The window 94 includes a light transmitting material. The window 94 may include resin or glass material.

The window 94 may cover at least the camera hole 372. Specifically, the window 94 may cover the camera hole 372 and a portion of the module mounting portion 371 surrounding the camera hole 372. The window 94 may contact the upper surface 37 and the lower end of the cavity 30.

Preferably, a gasket 96 may be provided which seals a space between the window 94 and the inner surface of the cavity 30 around the camera hole 372. The gasket 96 may be formed to surround the circumference of the camera hole 372. The gasket 96 may contact the window 94 and one surface of the cavity 30 which defines the circumference of the camera hole 372.

The window 94 may overlap the camera hole 372. Specifically, at least a portion of the window 94 may overlap the camera hole 372 in the axial direction Ax of the camera hole 372.

The window 94 may be spaced apart from the camera hole 372. If the window 94 is located too far away from the cavity 30 (camera hole 372), the window 94 is required to have a large width in order to ensure a viewing angle of the image sensor 91, but if the width of the window 94 increases, a problem occurs in that other components, such as the bracket and the like, also increase in size, such that the manufacturing cost increases and the inner space of the cavity 30 is reduced. In addition, if the window 94 is located too close to the cavity 30 (camera hole 372), heat inside the cavity 30 is transferred to the image sensor 91 through the window 94, thereby causing malfunction of the window 94.

Accordingly, in order to solve the above problems, it is preferred that the width of the camera hole 372 is greater than a distance T2 between the camera hole 372 and the window 94. More preferably, the width of the camera hole 372 may be five to six times the distance T2 between the camera hole 372 and the window 94.

The internal space of the camera hole 372, the space between the camera hole 372 and the image sensor 91, and the space between the window 94 and the camera hole 372 serve as an air gap, such that transfer of heat inside the cavity 30 to the image sensor 91 is primarily delayed by the window 94 and is secondarily delayed by the air gap. In addition, the image sensor 91 is spaced apart from the cavity 30, thereby reducing heat transfer from the cavity 30.

The width of the window 94 is preferably greater than the width of the camera hole 372. If the width of the window 94 is small, it is difficult to provide a sufficient viewing angle to the image sensor 91. The width of the window 94 is preferably greater than the distance T2 between the camera hole 372 and the window 94.

The imaging module 90 may further include an imaging cover 95 spaced apart from the window 94 and covering the window 94.

The imaging cover 95 is disposed inside the cavity 30, and prevents the window 94 from being damaged by various contaminants resulting from food inside the cavity 30 and has an air gap to reduce heat transferred to the window 94.

The imaging cover 95 includes a light transmitting material. The imaging cover 95 may include resin or glass material.

The imaging cover 95 may cover at least the window 94. Specifically, the imaging cover 95 may overlap the window 94. Specifically, at least a portion of the imaging cover 95 may overlap the window 94 in the axial direction Ax of the camera hole 372.

The imaging cover 95 may be spaced apart from the window 94. If the imaging cover 95 is located too far away from the window 94, the imaging cover 95 is required to have a large width in order to ensure a viewing angle of the window 94, but if the width of the imaging cover 95 increases, a problem occurs in that other components, such as the bracket and the like, also increase in size, such that the manufacturing cost increases and the inner space of the cavity 30 is reduced. In addition, if the imaging cover 95 is located too close to the window 94, heat inside the cavity 30 is transferred to the window 94 through the imaging cover 95, thereby causing malfunction of the imaging sensor 91.

Accordingly, in order to solve the above problems, it is preferred that the width of the camera hole 372 is greater than a distance T3 between the window 94 and the imaging cover 95. More preferably, the width of the camera hole 372 may be five to six times the distance T3 between the window 94 and the imaging cover 95.

The width of the imaging cover 95 is preferably greater than the width of the camera hole 372. This is because if the width of the imaging cover 95 is small, it is difficult to provide a sufficient viewing angle to the image sensor 91. The width of the imaging cover 95 is preferably greater than the distance T3 between the window 94 and the imaging cover 95.

The image sensor 91, the window 94, and the imaging cover 95 may overlap in the axial direction Ax of the camera hole 372.

The cooking apparatus 1 may further include a bracket for fixing the positions of the image sensor 91, the window 94, and the imaging cover 95. The bracket may further include a sensor bracket 96 and a cover bracket 97.

The sensor bracket 96 is coupled to an outer portion of the cavity 30 to fix the image sensor 91. The sensor bracket 96 may be coupled to an upper surface of the module mounting portion 371. A fastening hole 373, to which a fastening member having passed through the sensor bracket 96 is coupled, may be formed in the module mounting portion 371.

The sensor bracket 96 fixes the position of the image sensor 91. The sensor bracket 96 may accommodate the power supply 92 and the heat sink 93. The sensor bracket 96 may support the image sensor 91 to separate the image sensor 91 from the camera hole 372. The sensor bracket 96 may include various through-holes through which air for cooling the image sensor 91 and the power supply 92 flows.

The cover bracket 97 may be coupled to an inner portion of the cavity 30 to fix the window 94. The cover bracket 97 may be coupled to a lower surface of the module mounting portion 371. A fastening hole 373, to which a fastening member having passed through the cover bracket 97 is coupled, may be formed in the module mounting portion 371.

The cover bracket 97 fixes the position of the window 94. The cover bracket 97 may support the window 94 to separate the window 94 from the camera hole 372. The cover bracket 97 fixes the position of the imaging cover 95. The cover bracket 97 may support the imaging cover 95 to separate the imaging cover 95 from the window 94.

Specifically, the cover bracket 97 may include a ring-shaped accommodating portion 973 that accommodates the window 94 and the imaging cover 95, and a separation protrusion 971 maintaining a distance between the window 94 and the imaging cover 95 and protruding from the accommodating portion 973. A space 972 between the window 94 and the imaging cover 95 is formed inside the accommodating portion 973. In this case, the gasket 96 may seal a space between the cover bracket 97 and the module mounting portion 371.

The cooking apparatus may include an air guide for increasing the flow velocity and flow rate of air supplied to the imaging module by the blower fan. The air guide guides the air supplied to the imaging module by the blower fan.

A cooking apparatus 1' including an air guide 200 will be described in detail below.

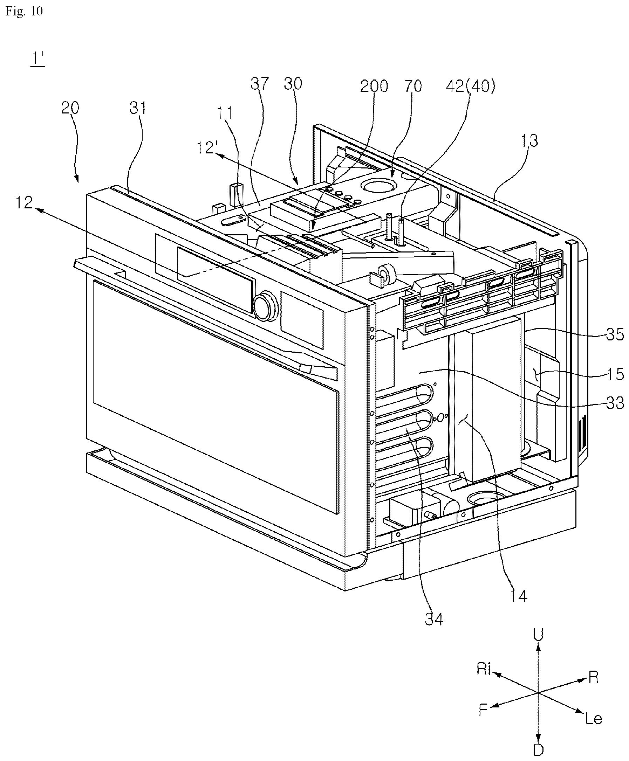

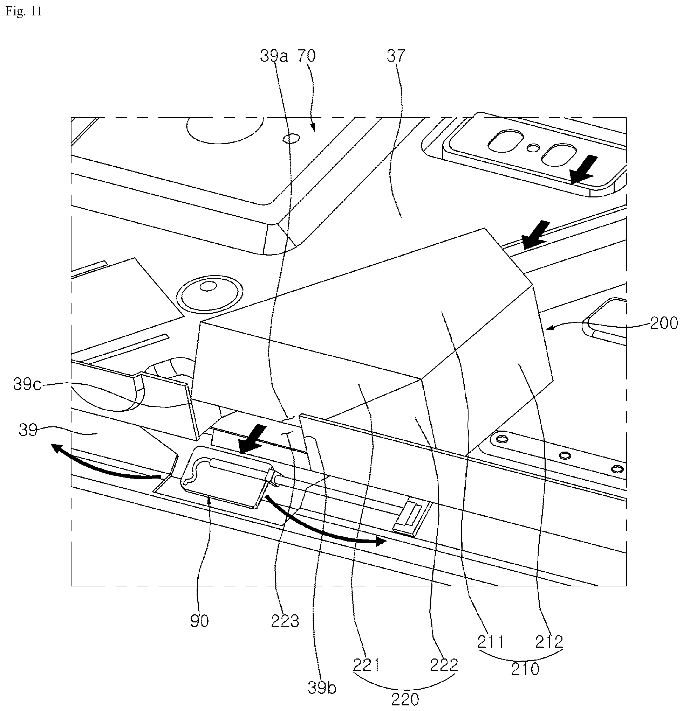

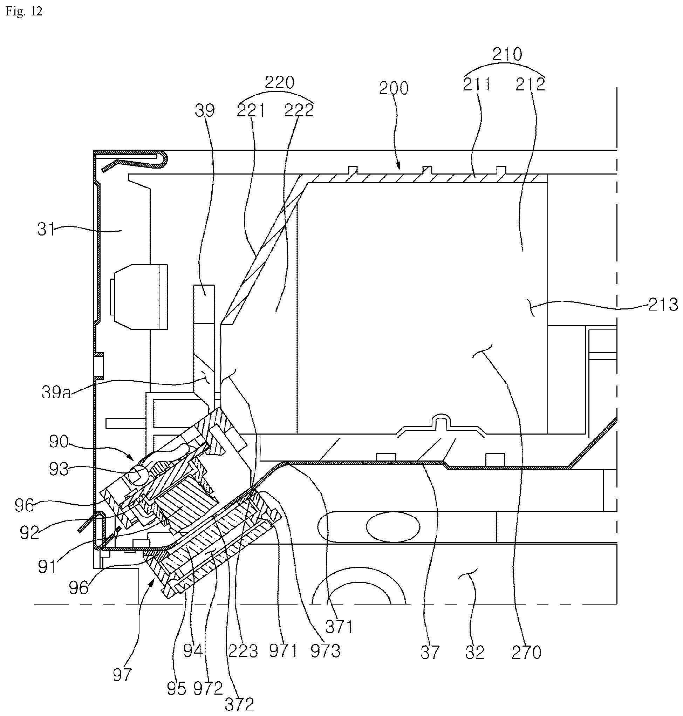

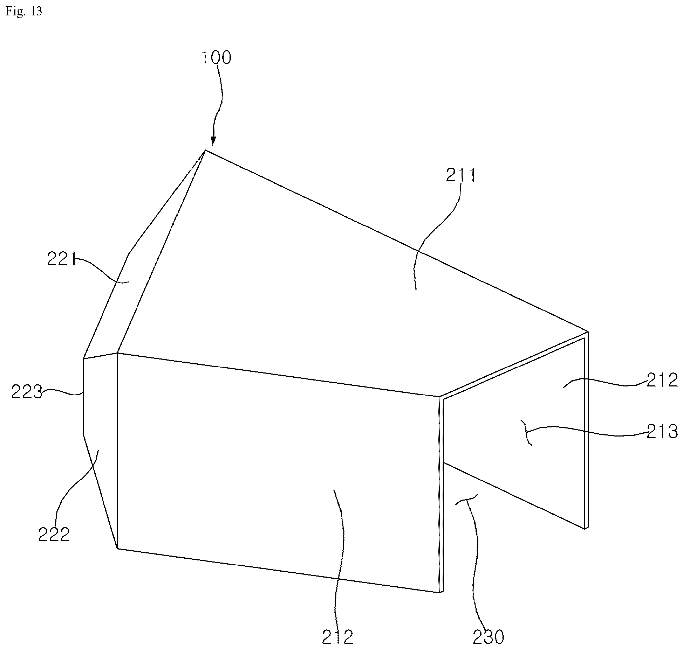

FIG. 10 is a perspective view of a cooking apparatus 1' according to another embodiment of the present disclosure; FIG. 11 is a perspective view of the periphery of an air guide 200 illustrated in FIG. 10; FIG. 12 is a cross-sectional view taken along line 12-12' of FIG. 10; and FIG. 13 is a perspective view of the air guide 200 illustrated in FIG. 10.

Referring to FIGS. 10 to 13, the cooking apparatus 1' according to another embodiment (second embodiment) of the present disclosure includes a casing 10 that covers at least a portion of the cavity 30 to define an air flow space, in which air flows, between the cavity 30 and the casing 10, an imaging module 90 mounted in the air flow space and configured to capture an image of the interior of the cavity 30, a blower fan 80 configured to blow air in the air flow space, and an air guide 200 configured to guide a portion of the air flowing in the air flow space to the imaging module 90.

In addition, the cooking apparatus 1' according to the second embodiment of the present disclosure is characterized in that the air guide 200 is further mounted in addition to the embodiment (first embodiment) of FIGS. 1 to 9. The following description will focus on differences from the first embodiment, and portions or parts not specifically described in the second embodiment are considered the same as those in the first embodiment.

Upper, left, right, and rear surfaces of the cavity 30 are separated from the casing 10 to form a space, and various electric or electronic parts may be accommodated in the space formed between the cavity 30 and the casing 10. The space between the upper, left, right, and rear surfaces of the cavity 30 and the casing 10 may be defined as an air flow space 11, 14, and 15 in which air flows.

The air flow space 11, 14, and 15 may be defined as an upper flow space 11 between the upper surface 37 of the cavity 30 and an upper surface of the casing 10, a rear flow space 15 between the rear surface 35 of the cavity 30 and the rear surface 13 of the casing 10, and a lateral flow space 14 between the lateral surface 33 of the cavity 30 and the lateral surface of the casing 10. The rear surface 13 of the casing 10 may also be referred to as a back cover.

The upper flow space 11, the rear flow space 15, and the lateral flow space 14 are connected to each other such that air may flow therein.

The blower fan 80 may be disposed in the rear flow space 15. Specifically, the blower fan 80 may be disposed at a rear end of the rear surface 35 of the cavity 30. The imaging module 90 is disposed in the upper flow space 11.

Air blown by the blower fan 80 flows to the upper flow space 11 through the rear flow space 15, and then flows from the upper flow space 11 to the lateral flow space 14 to be discharged through an outlet (not shown) formed in a bottom portion of the cavity 30. In this case, the blower fan 80 is installed so that the air may flow from bottom to top in the rear flow space 15.

The air guide 200 guides a portion of the air flowing in the air flow space to the imaging module 90, thereby rapidly and effectively cooling the imaging module 90.

For example, the air guide 200 may include an air channel 270 including an inlet 213 through which the air of the air flow space is introduced, and an outlet 223 through which the air introduced through the inlet 213 is discharged toward the imaging module 90.

The air channel 270 may be closed except the inlet 213 and the outlet 223, but may be opened except the inlet 213 and the outlet 223.

The inlet 213 may be located closer to the imaging module 90 than the outlet 223. The outlet 223 may be located closer to the blower fan 80 than the inlet 213. Specifically, the inlet 213 may be located in front of the outlet 223. The outlet 223 and the inlet 213 may be formed in the upper flow space 11.

At least a portion of the outlet 223 may overlap the imaging module 90 in the front-rear direction. It is preferred that the outlet 223 and the inlet 213 may totally overlap or at least partially overlap in the front-rear direction.

The outlet 223 and the inlet 213 may not overlap in the front-rear direction, but in this case the flow path of air is significantly inclined relative to the front-rear direction, thereby increasing air resistance.

The inlet 213 is opened in the front-rear direction and is closed in the up-down direction and the left-right direction. Accordingly, a portion of the air flowing from the rear to the front in the upper flow space 11 may be introduced through the inlet 213.

The outlet 223 is opened in the front-rear direction (FR) and is closed in the up-down direction (UD) and the left-right direction (LeRi). Accordingly, a portion of the air introduced through the inlet 213 may be supplied to the imaging module 90 through the outlet 223.

Obviously, in some examples, the inlet 213 and the outlet 223 may be opened in the front-rear direction, and may be opened in one of the up-down direction and the left-right direction and closed in the other direction.

A cross-sectional area of the inlet 213 may be equal to a cross-sectional area of the outlet 223. In order to improve heat exchange efficiency by increasing the flow velocity and flow rate of the air supplied to the imaging module 90, the cross-sectional area of the inlet 213 is preferably greater than the cross-sectional area of the outlet 223. Here, the cross-sectional area of the inlet 213 and the cross-sectional area of the outlet 223 may refer to the cross-sectional area of the inlet 213 and the cross-sectional area of the outlet 223 when the cooking apparatus is cut along the plane parallel to the up-down direction and the left-right direction.

For example, the cross-sectional area of the air channel 270 may increase from the outlet 223 toward the inlet 213.

In another example, the cross-sectional area of the air channel 270 may increase, and then decrease from the outlet 223 toward the inlet 213.

The structure of the air guide 200 will be described in detail below.

The air guide 200 may define the air channel 270 with one surface of the cavity 30. Specifically, the air guide 200 may be coupled to an upper end of the upper surface 37 of the cavity 30, and may define the air channel 270 with the upper surface 37 of the cavity 30.

For example, the air guide 200 may include two first guide lateral surfaces 212 that are in contact with the upper surface 37 of the cavity 30 and are spaced apart from each other, a first guide upper surface 211 connecting upper ends of the first guide lateral surfaces 212, two second guide lateral surfaces 222 that are in contact with the upper surface 37 of the cavity 30 and have one ends connected to the first guide lateral surfaces 212, and a second guide upper surface 221 connecting upper ends of the second guide lateral surfaces 222 and connected to one end of the second guide upper surface 221.

Lower ends of the two first guide lateral surfaces 212 are in contact with the upper surface 37 of the cavity 30, and the first guide upper surface 211 connects the upper ends of the two first guide lateral surfaces 212, such that the inlet 213 is defined which is surrounded by the two first guide lateral surfaces 212, the first guide upper surface 211, and the upper surface 37 of the cavity 30 that faces the first guide upper surface 211.

Obviously, in some examples, the lower ends of the two first guide lateral surfaces 212 may also be coupled to the upper surface 37 of the cavity 30.

The lower ends of the two second guide lateral surfaces 212 are in contact with the upper surface 37 of the cavity 30, and the second guide upper surface 221 connects the upper ends of the second guide lateral surfaces 222, such that the outlet 223 is defined which is surrounded by the two second guide lateral surfaces 212, the second guide upper surface 221, and the upper surface 37 of the cavity 30 that faces the second guide upper surface 221.

The front ends of the first guide lateral surfaces 212 are connected to the lower ends of the second guide lateral surfaces 222, and the front end of the first guide upper surface 211 is connected to the lower end of the second guide upper surface 221.

The air guide 200 has a shape in which the inlet 213 is formed at the lower end, the outlet 223 is formed at the front, and an opening 230 is formed at the lower end. The opening 230 at the lower end of the air guide 200 is covered by the upper surface 37 of the cavity 30.

The first guide lateral surfaces 212 and the second guide lateral surfaces 222 may extend in a direction intersecting the upper surface 37 of the cavity 30, and the first guide upper surface 211 and the second guide upper surface 221 may extend in a direction parallel to or at an acute angle with respect to the upper surface 37 of the cavity 30.

Specifically, the second guide upper surface 221 may be inclined downward from the rear to the front. When the second guide upper surface 221 is inclined downward from the rear to the front, the air that flows downward from the rear to the front may be supplied efficiently to the imaging module 90 that is inclined relative to the upper surface 37 of the cavity 30.

A distance between the first guide lateral surfaces 212 may increase from the rear to the front, and a distance between the second guide lateral surfaces 222 may decrease from the rear to the front.

The cooking apparatus 1' may further include a blocking wall 39 protruding from the upper end of the cavity 30. The blocking wall 39 may block the air, flowing from the rear to the front of the cavity 30, from leaking through the door.

The blocking wall 39 may protrude upward from the upper surface 37 of the cavity 30 and may extend in the left-right direction. The blocking wall 39 may be disposed between the imaging module 90 and the air guide 200. The blocking wall 29 may further include a flow groove 39a that communicates with the outlet 223.

The flow groove 39a may be recessed from a portion of the blocking wall 39. For example, the flow groove 39a may be recessed downward from an upper end of the blocking wall 39. Obviously, in some examples, when the blocking wall 39 is divided into two walls, the flow groove 39a may be defined as a hole formed between the two divided blocking walls 39.

The flow groove 39a may communicate with the outlet 223. Here, the communication may mean that air flows between the flow groove 39a and the outlet 223.

Specifically, a left surface 39b of the flow groove 39a may be connected or adjacent to a front end of one of the second guide lateral surfaces 222, and a right surface 39c of the flow groove 39a may be connected or adjacent to a front end of the other one of the second guide lateral surfaces 222.

The flow groove 39a may be adjacent to the imaging module 90. Specifically, the flow groove 39a may overlap the imaging module 90 in the front-rear direction. Obviously, the flow groove 39a may overlap the outlet 223 in the front-rear direction.

The blocking wall 39 may be disposed adjacent to the front end of the upper surface 37 of the cavity 30. The air guide 200 may be disposed adjacent to the front end of the upper surface 37 of the cavity 30. When the air guide 200 is disposed adjacent to the front end of the upper surface 37 of the cavity 30, the air guide 200 having a short length may efficiently supply air to the imaging module 90.

There is no limitation on the length of the air guide 200 in the front-rear direction, but as other electric parts are disposed in the upper flow space 11, such that the length of the air guide 200 is preferably shorter than a half of the length of the upper end of the cavity 30 in the front-rear direction. That is, a distance between the inlet 213 and the outlet 223 in the front-rear direction is preferably shorter than a half of the length of the upper end of the cavity 30 in the front-rear direction.

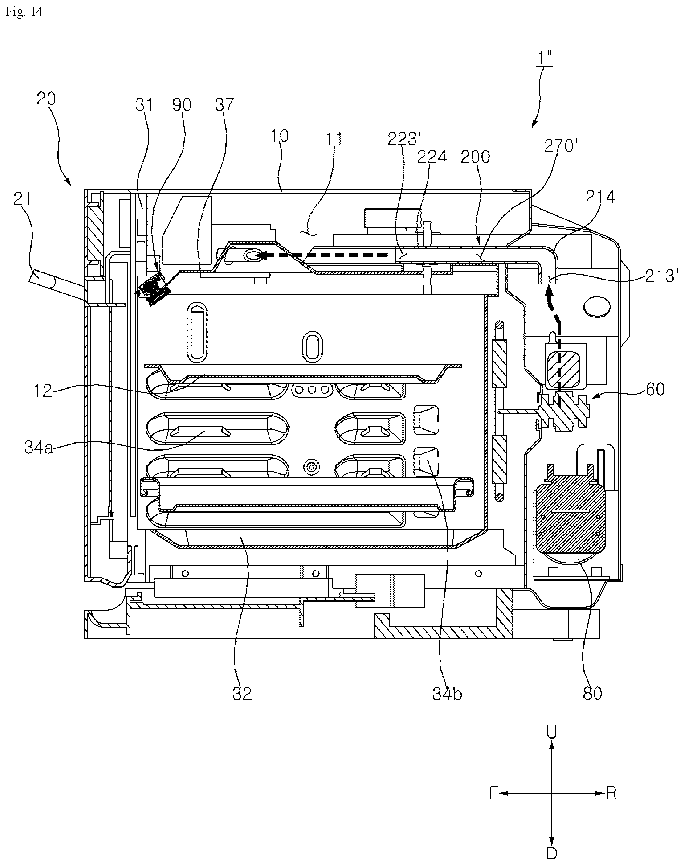

FIG. 14 is a cross-sectional view of a cooking apparatus 1" according to yet another embodiment of the present disclosure.

Referring to FIG. 14, the cooking apparatus 1" according to yet another embodiment (third embodiment) of the present disclosure is different from the first embodiment in that the cooking apparatus 1" further includes an air guide 200'. In addition, the third embodiment is different from the second embodiment in terms of the structure and position of the air guide 200'.

Hereinafter, the third embodiment will be described based on differences from the second embodiment, and portions or parts not specifically described herein are considered the same as those in the second embodiment.

The air guide 200' in the third embodiment includes an outlet 223' disposed in the upper flow space 11, and an inlet 213' disposed in the rear flow space 15. Accordingly, a portion of the air guide 200' may be disposed in the upper flow space 11, and another portion of the air guide 200' may be disposed in the rear flow space 15.

A portion of the air guide 200' may be coupled to the rear surface 35 of the cavity 30, and another portion of the air guide 200' may be coupled to the upper surface 37 of the cavity 30.

The inlet 213' of the air guide 200' may be opened downward, and the outlet 223' may be opened forward. The air channel 270 may have an inverted L-shape. Air discharged upward by the blower fan 80 is introduced through the inlet 213' from the rear flow space 15, and is changed in direction to be discharged through the outlet 223'.

The air guide 200' may have a tubular shape. Specifically, the air guide 200' may include a first flow path 214 disposed in the rear flow space 15 and having the inlet 213' formed at the lower end, and a second flow path 224 communicating with an upper end of the first flow path 214 and extending upward and having the outlet 223' formed at the front end. At least a portion of the first flow path 214 may be positioned in the upper flow space 11.

Obviously, although not illustrated herein, the front end of the first flow path 214 may be open and the front opening of the first flow path 214 may be closed by the rear surface 35 of the cavity 30, and the lower end of the second flow path 224 may be open and a lower end of the second flow path 224 may be closed by the upper surface 37 of the cavity 30.

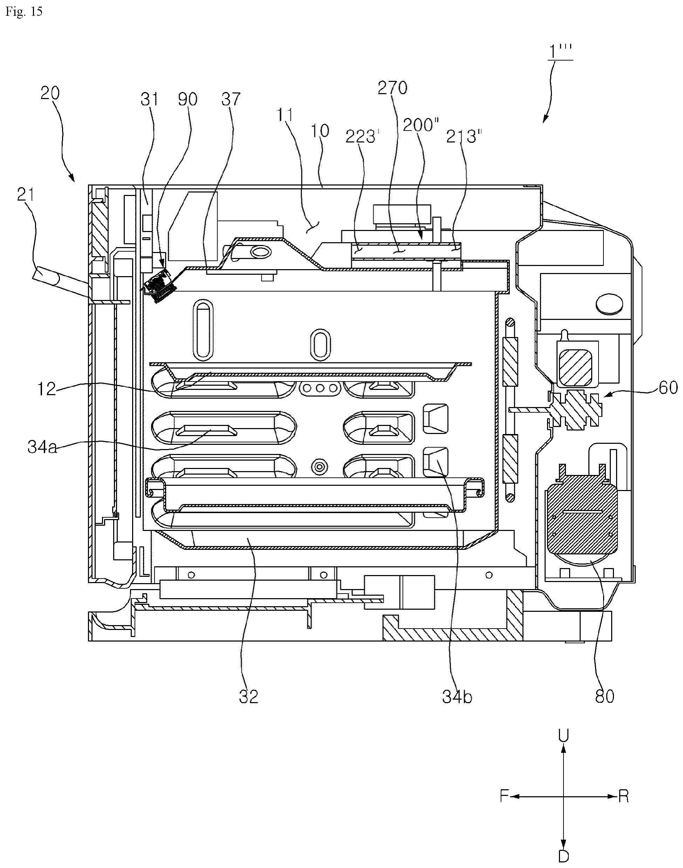

FIG. 15 is a cross-sectional view of a cooking apparatus 1‴ according to yet another embodiment of the present disclosure.

Referring to FIG. 15, the cooking apparatus 1‴ according to yet another embodiment (fourth embodiment) of the present disclosure is different from the second embodiment in terms of position of an air guide 200".

Hereinafter, the fourth embodiment will be described based on differences from the second embodiment, and portions or parts not specifically described herein are considered the same as those in the second embodiment.

The air guide 200" in the fourth embodiment may be disposed adjacent to the rear end of the upper surface 37 of the cavity 30. The inlet 213 of the air guide 200" may be formed closer to the rear end of the cavity 30 than the outlet 223.

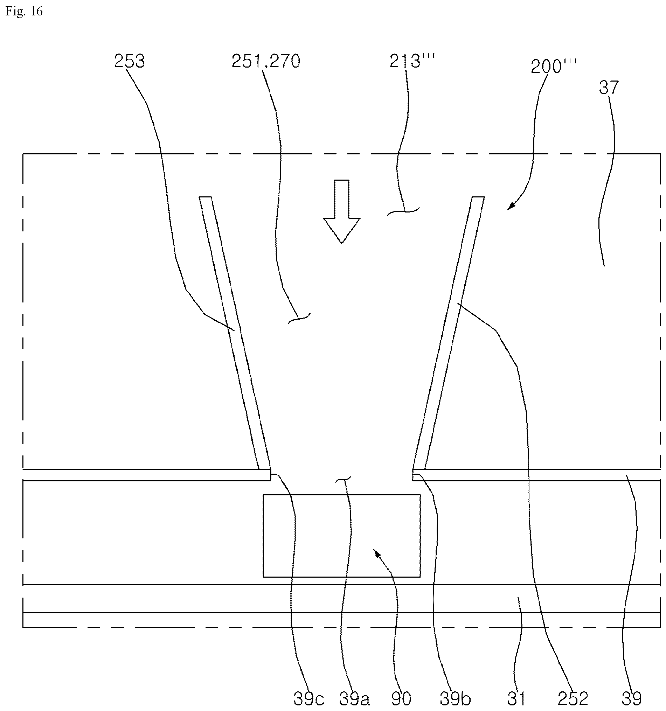

FIG. 16 is a top view of a cooking apparatus from which a cabinet is removed, according to yet another embodiment of the present disclosure.

Referring to FIG. 16, the cooking apparatus 1 according to yet another embodiment (fifth embodiment) of the present disclosure is different from the second embodiment in terms of structure of an air guide 200‴.

Hereinafter, the fifth embodiment will be described based on differences from the second embodiment, and portions or parts not specifically described herein are considered the same as those in the second embodiment.

The air guide 200‴ in the fifth embodiment may include a first guide surface 252 and a second guide surface 253.

The first guide surface 252 and the second guide surface 253 may be disposed to face each other, such that a space 251 may be defined between the first guide surface 252 and the second guide surface 253. The space 251 between the first guide surface 252 and the second guide surface 253 defines the air channel 270.

The first guide surface 252 may extend in the up-down direction and front-rear direction. The first guide surface 252 may extend in the up-down direction and may be inclined at an acute angle with respect to the front-rear direction.

The second guide surface 253 may extend in the up-down direction and front-rear direction. The second guide surface 253 may extend in the up-down direction and may be inclined at an acute angle with respect to the front-rear direction.

The first guide surface 252 and the second guide surface 253 may be disposed between the upper surface 37 of the cavity 30 and the upper surface of the casing 10. The upper end of the first guide surface 252 may be connected to the upper end of the casing 10, and the lower end of the first guide surface 252 may be separated from or in contact with the upper surface 37 of the cavity 30. Obviously, by contrast, the upper end of the first guide surface 252 may be separated from or in contact with the upper end of the casing 10, and the lower end of the first guide surface 252 may be coupled to the upper surface 37 of the cavity 30.

The upper end of the second guide surface 253 may be connected to the upper end of the casing 10, and the lower end of the second guide surface 253 may be separated from or in contact with the upper surface 37 of the cavity 30. Obviously, by contrast, the upper end of the second guide surface 253 may be separated from or in contact with the upper end of the casing 10, and the lower end of the second guide surface 253 may be coupled to the upper surface 37 of the cavity 30.

Accordingly, the air guide 200 may cool the imaging module 90 by using the air channel 270 defined by two facing plates, the upper surface 37 of the cavity 30, and the upper surfaces of the casing 10. Accordingly, the manufacturing cost of the air guide 200 may be reduced.

The left surface 39b of the flow groove 39a may be adjacent to the front end of the first guide surface 252 or may be in contact with the front end of the first guide surface 252. The right surface 39c of the flow groove 39a may be adjacent to the front end of the second guide surface 253 or may be in contact with the front end of the first guide surface 252.

A distance between the first guide surface 252 and the second guide surface 252 may decrease toward the front. Accordingly, the flow velocity and flow rate of air flowing from the rear to the front may increase.

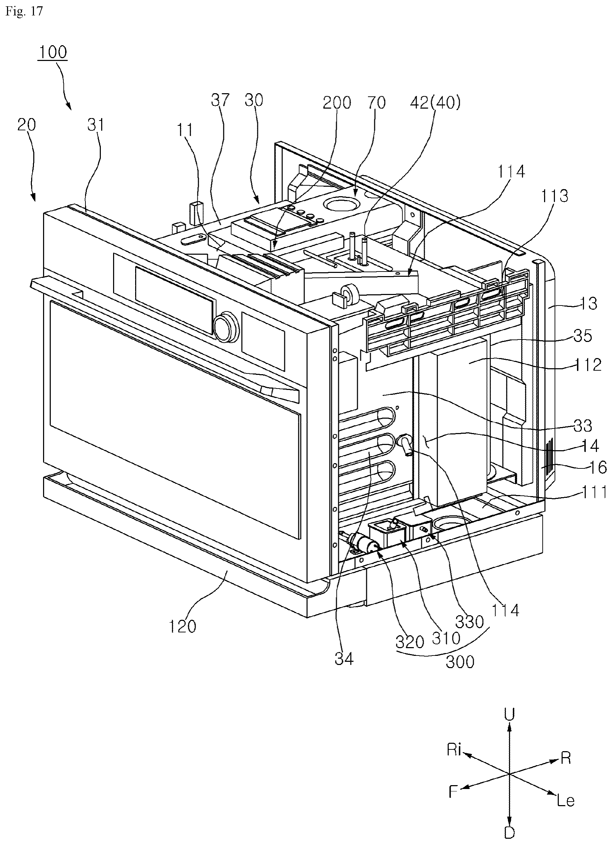

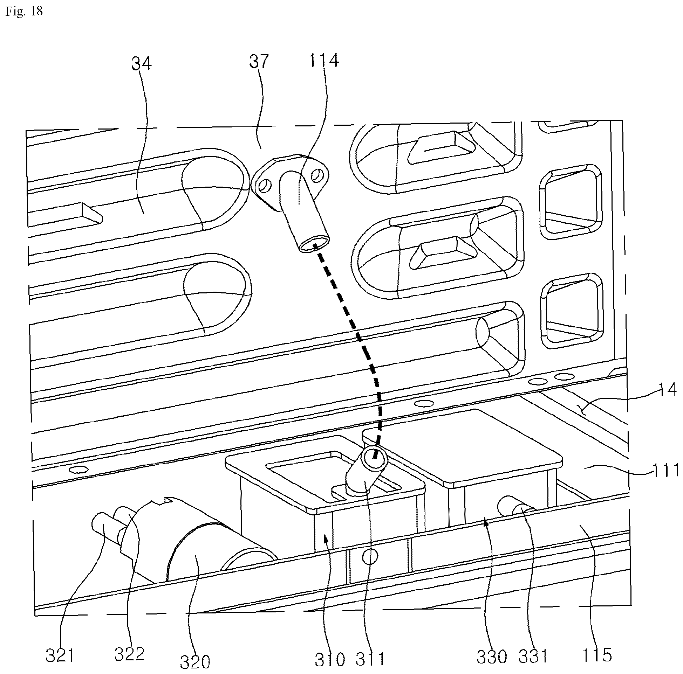

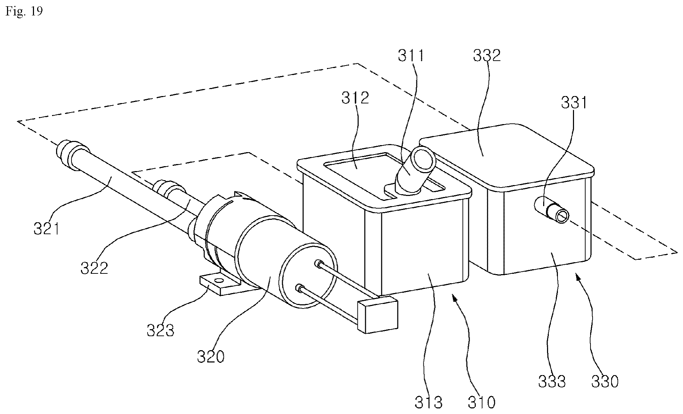

FIG. 17 is a perspective view of a cooking apparatus 100 from which a portion of a casing 10 is removed, according to yet another embodiment of the present disclosure; FIG. 18 is an enlarged view of the periphery of a gas sensing module 300 illustrated in FIG. 17; and FIG. 19 is a diagram illustrating the configuration of the gas sensing module 300 illustrated in FIG. 17.

Referring to FIGS. 17 to 19, the cooking apparatus 100 according to yet another embodiment (sixth embodiment) of the present disclosure is different in that the gas sensing module 300 is added to the first to fifth embodiments.

Hereinafter, the sixth embodiment will be described based on differences from the first embodiment, and portions or parts not specifically described herein are considered the same as those in the first embodiment.

A base plate 111 may be provided at a lower portion of the cavity 30. An upper surface of the base plate 111 may be fixed to lower ends of a front panel 31, a back plate 16, and a back cover 13. The base plate 111 may be a lower surface of the casing 10. Obviously, the base plate 111 may have a larger area than the lower surface of the cavity 30, when viewed vertically.

A space 11 and 14 may be located between the cavity 30 and the casing 10.

A lateral flow space 14 is located at an upper portion of both ends of the base plate 111. Both ends of the base plate 111 in a lateral direction may protrude more outwardly than the lower portion of the cavity 30.

A flange 115 may be formed at the edge of the base plate 111. The base plate 111 has a plate shape parallel to a horizontal direction, and the flange 115 may protrude upward from the edge of the base plate 111. The lateral surface of the casing 10 may be coupled to the flange 115.

An exhaust port (not shown) may be formed in an inner portion of the base plate 111. The exhaust port may serve as an outlet so that air, blown by the blower fan 80 to flow in the cooking apparatus 100, is discharged to the outside through an exhaust duct 112 while forming an airflow. In addition, a leg may be provided at a bottom edge of the base plate 111.

In addition, an electric element chamber may be provided in a space between the cavity 30 and the casing 10. Various electric or electronic parts and a circuit board 113 may be disposed in the electric element chamber. The electric or electronic parts and the circuit board 113 may be disposed at an upper portion of the base plate 111. The electric or electronic parts and the circuit board 113 may be disposed in the lateral flow space 14 and/or the upper flow space 11.

The electric or electronic parts and the circuit board 113 may be preferably disposed adjacent to the upper end of the lateral surface 33 of the cavity 30.

In this case, the cavity 30 may further include an exhaust portion 114 for exhausting gas in the cooking chamber 32 to the outside of the cavity 30. The exhaust portion 114 may be a hole or a tube that is formed in the cavity 30 and allows communication between the cooking chamber 32 and the outside of the cavity 30.

The exhaust portion 114 may be a tube protruding from the cavity 30. The exhaust portion 114 may be formed on the lateral surface 33 of the cavity 30. The exhaust portion 114 may be preferably installed at a middle height of the lateral surface 33 of the cavity 30 and may exhaust gas downwardly.

An exhaust port 114a of the exhaust portion 114 may open downwardly. The exhaust portion 114 may be inclined such that a distance between the exhaust portion 114 and the lateral surface 33 of the cavity 30 increases from top to bottom. The exhaust portion 114 may be inclined with respect to vertical and horizontal directions.

That is, the exhaust portion 114 may be formed so that gas may be provided to the gas sensing module 300 disposed below the exhaust portion 114 and the gas discharged from the exhaust portion 114 may be discharged to the base plate 111.

The gas sensing module 300 may be mounted in a space between the cavity 30 and the casing 10 to detect gas generated in the cooking chamber 32. The gas sensing module 300 may be mounted between the cavity 30 and the casing 10 to detect gas discharged from the exhaust portion 113. As the gas sensing module 300 is mounted in the space between the cavity 30 and the casing 10, transfer of heat from the cooking chamber 32 may be reduced compared to the case where the gas sensing module 300 is mounted inside the cooking chamber 32, and the gas sensing module 300 may also be activated in a low temperature range, thereby improving reliability.

The gas sensing module 300 may be disposed in the lateral flow space 14 or the upper flow space 11. The gas sensing module 300 may be preferably disposed in the lateral flow space 14. When disposed in the lateral flow space 14, the gas sensing module 300 may be spaced apart from the upper flow space 11 in which the electric or electronic parts are located, thereby preventing degradation in reliability and accuracy of the gas sensing module 300 due to the heat generated by the electric or electronic parts.

The gas sensing module 300 may be disposed adjacent to the lower end of the cavity 30 in the lateral flow space 14.

When disposed in the lateral flow space 14, the gas sensing module 300 may be coupled to the lateral surface of the cavity 30. When disposed in the lateral flow space 14, the gas sensing module 300 is preferably coupled to the upper surface of the base plate 111.

When the gas sensing module 300 is disposed in the lateral flow space 14 and coupled to the upper surface of the base plate 111, the gas sensing module 300 may be exposed to the lower side by separating the casing 10 from the cavity 30, such that the gas sensing module 300 may be easily repaired. Further, the exhaust port is formed in the base plate 111, thereby reducing a staying time of the oil mist that stays in the air flow space, and allowing gas to be naturally collected downward due to the weight of gas containing oil mist.

Further, gas is collected into the base plate 111 having the exhaust port through which the existing air is discharged to the outside, such that the gas may be easily discharged to the outside of the cooking apparatus 100 after sensing the gas.

The gas sensing module 300 senses a low temperature gas after the oil mist is filtered from the gas discharged from the cooking chamber 32.

For example, the gas sensing module 300 includes an oil mist remover 310 and a gas sensor unit 330. In addition, the gas sensing module 300 may include an oil mist remover 310, a gas sensor unit 330, and a gas pump 320.

The oil mist remover 310 filters the oil mist contained in the gas discharged from the exhaust portion 114. The oil mist remover 310 removes at least a portion of the oil mist contained in the gas discharged from the exhaust portion 114.

The oil mist remover 310 vertically overlaps the exhaust portion 114. When the oil mist remover 310 vertically overlaps the exhaust portion 114, it is effective in that the gas discharged from the exhaust portion 114 may rapidly flow into the oil mist remover 310. The oil mist remover 310 may be disposed below the exhaust portion 114.

This is because if the oil mist remover 310 does not vertically overlap the exhaust portion 114, a staying time of the gas discharged from the cooking chamber 32 that stays in the lateral flow space 14 increases, thereby causing the oil mist to be condensed at an upper end of the base plate 111.

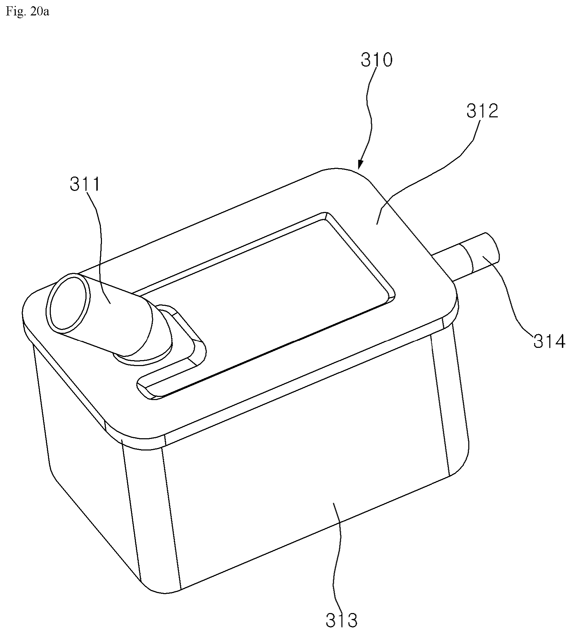

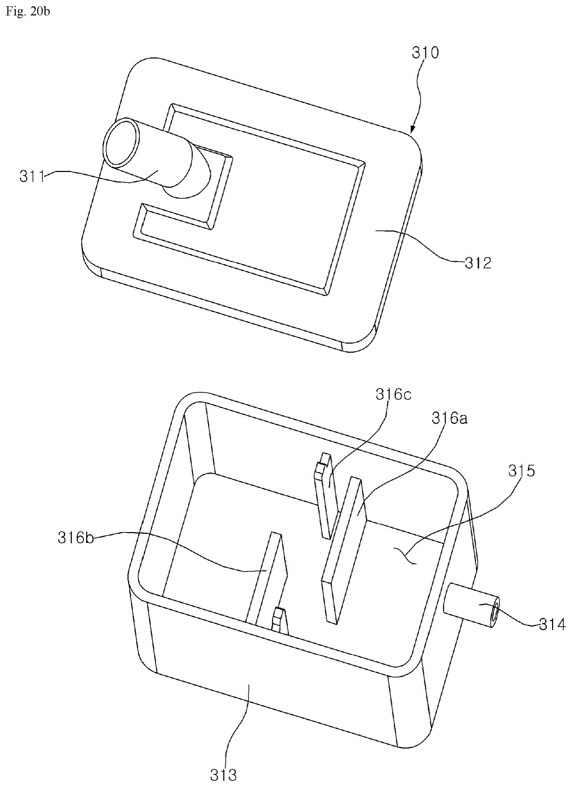

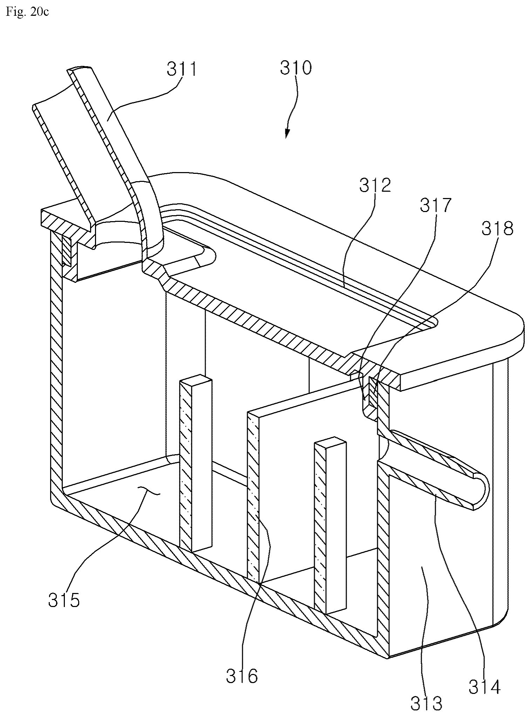

Particularly, referring to FIG. 20, the oil mist remover 310 may include an oil mist removal chamber 312 and 313, a first gas inlet 311, and a first gas outlet 314.

The oil mist removal chambers 312 and 313 defines a gas flow space 315 therein in which the gas discharged from the exhaust portion 114 flows, and includes a plurality of partition walls 316 that reduce the velocity and temperature of the gas flowing therein.

The plurality of partition walls 316 may be disposed so that a gas flow direction changes between one side and the opposite side of the gas flow space 315, and the flow velocity of the gas is reduced. In the oil mist removal chamber 312 and 313, the flow velocity of the gas is reduced and temperature is lowered, such that the oil mist is condensed.

The oil mist removal chamber 312 and 313 may be formed as one body, but may include an oil mist chamber body 313 and an oil mist chamber cover 312 to facilitate separation and cleaning.

The oil mist chamber body 313 has an opening formed in the upper portion, and defines a gas flow space 315 therein, and has a first gas outlet 314 formed in one side thereof. The lower surface of the oil mist chamber body 313 may be coupled to the upper surface of the base plate 111.

The oil mist chamber body 313 has a lower surface and a lateral surface surrounding the periphery of the lower surface, with an upper surface being removed.

The plurality of partition walls 316, which partially overlap in a first direction, may be disposed in the gas flow space 315 of the oil mist chamber body 313. Here, the first direction is a gas flow direction.

The partition wall 316 may include a first partition wall 316a protruding from one surface of the oil mist chamber body, and a second partition wall 316b protruding from an opposite surface of the oil mist chamber body and spaced apart from the first partition wall 316a in the first direction. A flow path through which gas flows may be defined between the first partition wall 316a and the second partition wall 316b.

A third partition wall 316c, having a smaller size than the first partition wall 316a and the second partition wall 316b, may be disposed between the first partition wall 316a and the second partition wall 316b.

The oil mist chamber cover 312 covers an opening of the oil mist chamber body 313. The oil mist chamber cover 312 is an upper surface of the oil mist removal chamber 312 and 313. The lower surface and the lateral surface of the oil mist removal chamber 312 and 313 are the oil mist chamber body 313, and the upper surface of the oil mist removal chamber 312 and 313 is the oil mist chamber cover 312.

The oil mist chamber cover 312 has a plate shape and has a greater area than the opening of the oil mist chamber body 313. The oil mist chamber cover 312 may further include a coupling piece 317 which is inserted into the opening of the oil mist chamber body 313. The coupling piece 317 may protrude downward from a lower end of the oil mist chamber cover 312, and may be tightly fitted to the inner surface of the oil mist chamber body 313.

In addition, a sealing member 318, which is in contact with the oil mist chamber body 313 and the coupling piece to seal a space therebetween, may be disposed between the oil mist chamber body 313 and the coupling piece.

If the inside of the oil mist removal chamber 312 and 313 is full of oil mist condensate, it is possible to clean the inside of the oil mist removal chamber 312 and 313 by separating only the oil mist chamber cover 312.

Obviously, in another example, the oil mist removal chamber 312 and 313 may also include a filter (not shown) for filtering the oil mist inside the gas flow space 315.

The first gas inlet 311 allows the gas, discharged from the exhaust portion 114, to flow into the oil mist removal chamber 312 and 313. The first gas inlet 311 may be a hole or a tube that is formed in the oil mist removal chamber 312 and 313.

Specifically, the first gas inlet 311 may be formed in the oil mist chamber cover 312. The first gas inlet 311 may have a tubular shape protruding upward from the oil mist chamber cover 312. The first gas inlet 311 may be inclined such that a distance between the first gas inlet 311 and the lateral surface 33 of the cavity 30 decreases from top to bottom.

The first gas inlet 311 may vertically overlap the exhaust portion 114. The exhaust portion 114 may be disposed at an upper portion of the first gas inlet 311, thereby allowing the gas, discharged from the exhaust portion 114, to flow into the oil mist removal chamber 312 and 313 through the first gas inlet 311. The first gas inlet 311 is exposed to the lateral flow space 14.

A diameter of the first gas inlet 311 is preferably greater than a diameter of the second gas outlet 334 and the exhaust portion 114 in order to prevent the oil mist from being condensed and from clogging the first gas inlet.

Gas is discharged through the first gas outlet 314 after the oil mist is filtered from the gas in the oil mist removal chamber 312 and 313. The first gas outlet 314 may be a hole or a tube that is formed in one side of the oil mist chamber body 313. The first gas outlet 314 may be formed in one side of the oil mist chamber body 313 that is farthest from the first gas inlet 311. The first gas outlet 314 may be disposed below the first gas inlet 311.

The gas pump 320 may pump the gas discharged from the oil mist remover 310 and provide the gas to the gas sensor unit 330. The gas pump 320 may include an inlet tube 322 through which gas is introduced, and an outlet tube 321 through which pressurized gas is discharged. The gas pump 320 may be fixed to the base plate 111 by a pump bracket 323.

The inlet tube 322 of the gas pump 320 is connected to the first gas outlet 314. The outlet tube 321 of the gas pump 320 is connected to the second gas inlet 331 of the gas sensor unit 330. The gas pump 320 provides pressure for the oil mist remover 310 to suck gas, and provides compressed gas to the gas sensor 336, such that oil mist may be rapidly removed from the gas, and gas may be accurately sensed. Obviously, the gas pump 320 may be omitted in some examples.

The gas sensor unit 330 may detect the type and concentration of the gas discharged from the oil mist remover 310. The gas sensor unit 330 may detect the type and concentration of the gas discharged from the gas pump 320.

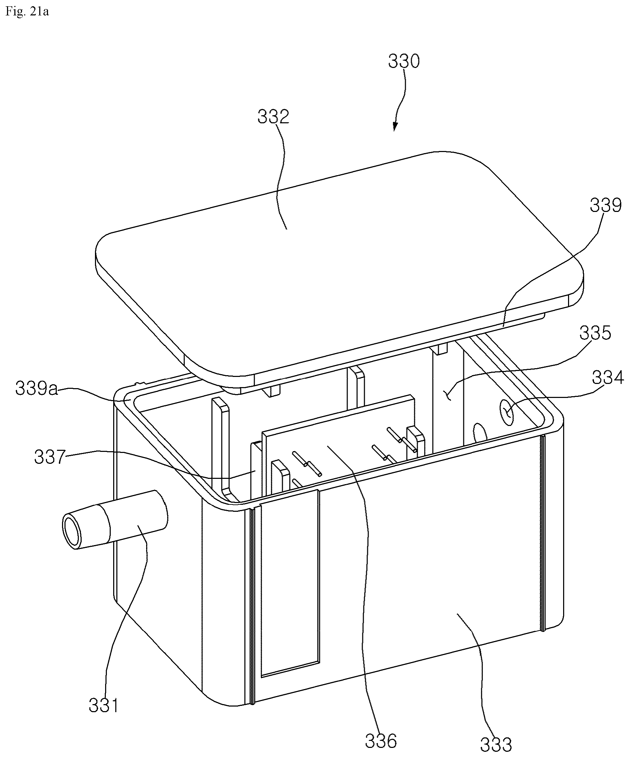

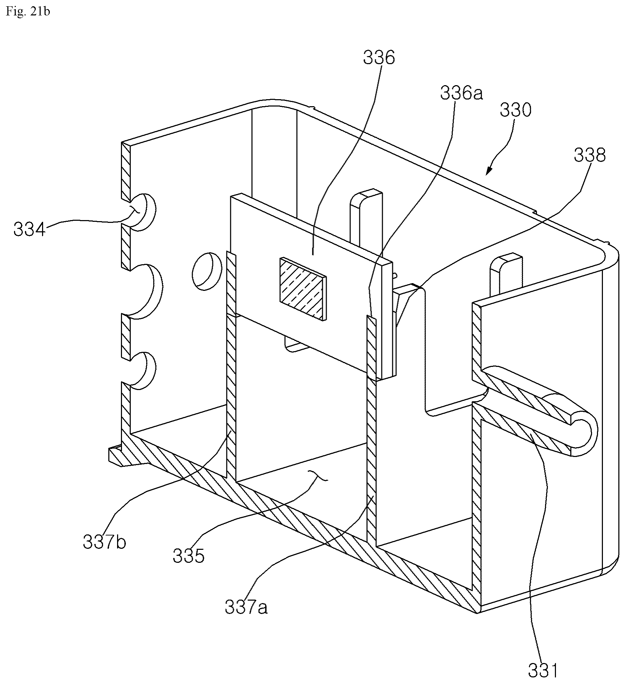

Referring to FIG. 21, the gas sensor unit 330 may a include a sensing chamber 332 and 333, a second gas inlet 331, and a second gas outlet 334.

The sensing chamber 332 and 333 may be formed as one body, but may include a sensing chamber body 333 and a sensing chamber cover 332 to facilitate separation and cleaning.

The sensing chamber body 333 has an opening formed in the upper portion, and defines a sensing space 335 therein, and has a second gas outlet 334 formed in one side thereof. The lower surface of the sensing chamber body 333 may be coupled to the upper surface of the base plate 111.

The sensing chamber body 333 has a lower surface and a lateral surface surrounding the periphery of the lower surface, with an upper surface being removed.

The sensing space 335 of the sensing chamber body 333 is a space in which the gas sensor 336 is disposed and gas sensed by the gas sensor 336 flows.

The sensing chamber body 333 may further include a sensor supporter 337a and 337b supporting and fixing the gas sensor 336. Two sensor supporters 337a and 337b may be spaced apart from each other and protrude upward from the lower surface of the sensing chamber body 333. The sensor supporter 337a and 337b may have a height that allows the gas sensor 336 to be sufficiently separated from the lower surface of the sensing chamber body.

The sensor supporter 337a and 337b may further include an insertion groove 338 into which the gas sensor 336 is inserted. The insertion groove 338 is a groove recessed downward from the upper end of the sensor supporter 337a and 337b.

The sensing chamber cover 332 covers an opening of the sensing chamber body 333. The lower surface and the lateral surface of the sensing chamber 332 and 333 are the sensing chamber body 333, and the upper surface of the sensing chamber 332 and 333 is the sensing chamber cover 332.

The sensing chamber cover 332 has a plate shape and has a greater area than the opening of the sensing chamber body 333. The sensing chamber cover 332 may further include a coupling portion 339 inserted into the opening of the sensing chamber body 333. The coupling portion 339 protrudes downward from the lower end of the sensing chamber cover 332 and may be tightly fitted to the inner surface of the sensing chamber body 333.

In addition, a sealing member 339a, which is in contact with the sensing chamber body 333 and the coupling portion 339 to seal a space therebetween, may be disposed between the sensing chamber body 333 and the coupling portion 339.

In the case where the gas sensor 336 needs to be repaired or replaced, the gas sensor 336 may be repaired or replaced by separating only the sensing chamber cover 332.

The second gas inlet 331 allows the gas, discharged from the oil mist remover 310, to flow into the sensing chamber 332 and 333. The second gas inlet 331 may be connected to the outlet tube 321 of the pump. The second gas inlet 331 may be formed in one side of the sensing chamber body 333.

The second gas outlet 334 allows the gas in the sensing chamber 332 and 333 to be discharged therethrough. The second gas outlet 334 may be formed in an opposite side facing the one side of the sensing chamber body 333. The second gas outlet 334 may include a plurality of holes formed in the opposite side of the sensing chamber body 333.

If the second gas outlet 334 has a plurality of holes, the flow velocity of the gas flowing to the lateral flow space 14 through the second gas outlet 334 is reduced, and the pressure decreases, such that the gas may be safely discharged to the outside of the cooking apparatus 100.

The gas sensor 336 is mounted in the sensing space 335 to sense the gas flowing in the sensing space 335. The gas sensor 336 may detect at least one of oxygen, nitrogen, carbon monoxide, and carbon dioxide in the gas flowing in the sensing space 335, and may provide the detected information to the controller. Further, the gas sensor 336 may detect at least one of carbon oxide, nitrogen oxide, and hydroxide. In addition, the gas sensor 336 may detect at least one of Benzaldehyde (P1), Nonanal (P2), 2-Decanal,(E)- (P3), and 2-Undecanal (P4).

The gas sensor 336 may be placed on or inserted into the sensor supporter 337a and 337b. Specifically, the gas sensor 336 may be inserted into the insertion groove 338 of the sensor supporter 337a and 337b.

In addition, the gas sensor 336 may include a sensor groove 336a. The sensor supporter 337a and 337b defining the periphery of the insertion groove 338 may be partially inserted into the sensor groove 336a.

Accordingly, the gas sensor 336 having a double-groove structure may be stably coupled to the sensor supporter 337a and 337b. The gas sensor 336 may be disposed between the second gas inlet 331 and the second gas outlet 334.

A cooking apparatus 100' according to yet another embodiment of the present disclosure will be described below.

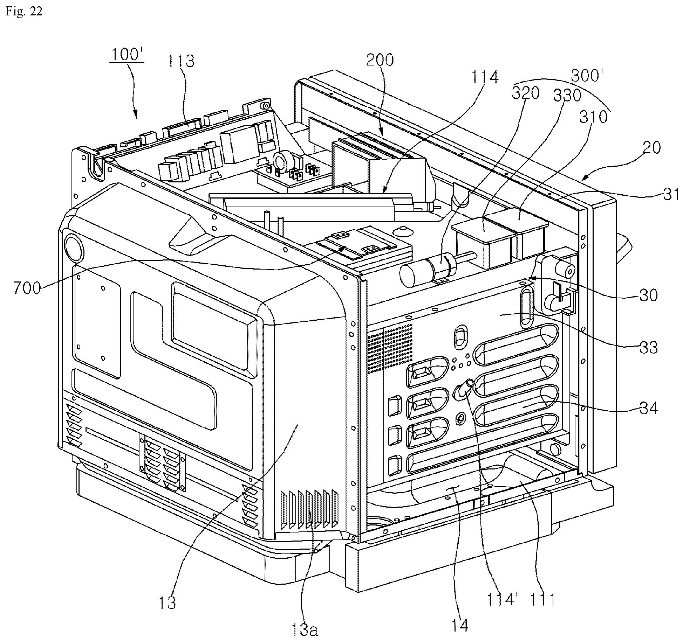

FIG. 22 is a perspective view of a cooking apparatus 100' from which a portion of the casing 10 is removed, according to yet another embodiment of the present disclosure.

Referring to FIG. 22, the cooking apparatus 100 according to yet another embodiment (seventh embodiment) of the present disclosure is different from the sixth embodiment in terms of position of a gas sensing module 300'.

Hereinafter, the seventh embodiment will be described based on differences from the sixth embodiment, and portions or parts not specifically described herein are considered the same as those in the sixth embodiment.

The gas sensing module 300' may be disposed in the upper flow space 11. Specifically, the gas sensing module 300' may be installed on the upper surface 37 of the cavity 30.

The gas sensing module 300' may be disposed adjacent to the right end of the upper surface 37 in order to reduce interference with other electric or electronic parts.

The gas sensor unit 330, the oil mist remover 310, and the gas pump 320 may be located above the cavity 30. The lower surface of the oil mist chamber body 313, the lower surface of the sensing chamber body 333, and the gas pump 320 may be coupled to the upper surface 37 of the cavity 30.

In this case, the exhaust portion 114 protruding from a right surface 33 of the cavity 30 may discharge gas upwardly. An exhaust portion 114' may extend upwardly and toward the right side of the right surface 33 of the cavity 30. In this case, the gas sensing module 300 may be disposed above the exhaust portion 114'.

The exhaust portion 114' is preferably connected to a tube and the first gas inlet 311 of the oil mist remover 310.

The gas sensing module 300' may be disposed in the upper flow space 11 or the lateral flow space 14 depending on design or use environment of the cooking apparatus 100'. The gas sensing module 300' is disposed outside the cavity 30, thereby preventing the gas sensing module 300' from being damaged by heat generated in the cooking chamber 32.

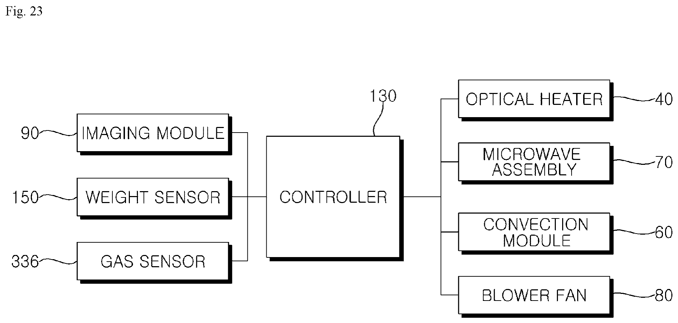

FIG. 23 is a block diagram illustrating a control configuration of a cooking apparatus 1 according to an embodiment of the present disclosure.

Referring to FIG. 23, the cooking apparatus 1 may further include a weight sensor 150, a gas sensor 336, and a controller 130.

The weight sensor 150 may detect the weight of food placed in the cooking chamber 32 and provide the weight information of the food to the controller 130.

The gas sensor 336 may detect the gas generated in the cooking chamber 32 and provide the gas information to the controller 130.

The controller 130 determines the type of food based on an image of the food captured by the image sensor 91, and may control at least one of the optical heater 40, the microwave assembly 70, and the convection module 60 by using a cooking method corresponding to the type of the food.

Accordingly, the cooking apparatus 100 may autonomously determine the type of food and automatically perform cooking by using a method suitable for the type of food.

In addition, the controller 130 determines the type of food based on an image of the food captured by the image sensor 91 and determines the weight of the food, and may control at least one of the optical heater 40, the microwave assembly 70, and the convection module 60 by using a cooking method corresponding to the type and weight of the food.

Accordingly, the cooking apparatus 100 may autonomously determine the type and weight of food and automatically perform cooking by using a method suitable for the type and weight of the food.

In addition, the controller 130 may determine whether cooking of the food is complete based on the gas information provided by the gas sensor 336.

Obviously, the controller 130 may analyze the image of the food and may also determine whether cooking of the food is complete based on a change in color, saturation, and brightness of the food image.

A cooking apparatus according to the present disclosure has one or more of the following effects.

The present disclosure has an effect in that gas generated in a cooking chamber is discharged to the outside of the cooking chamber, and an oil mist remover and a gas sensor are provided in a space between a casing and a cavity as an outer portion of the cooking chamber, such that the gas generated in the cooking chamber may be primarily cooled in the space between the cavity and the casing, and oil mist is removed by sucking the gas between the cavity and the casing, thereby allowing for accurate gas sensing and improving oil mist removal efficiency, and the temperature of gas flowing into the gas sensor is lowered, thereby improving the reliability of the gas sensor.

In addition, the present disclosure has an effect in that an oil mist remover that removes oil mist and a gas sensor unit have a chamber structure, in which a chamber body is coupled to a base plate of a casing and a cover is coupled to the chamber body, such that the interior of the oil mist remover and the gas sensor unit is exposed by separating only the cover, and it is possible to easily separate and clean the oil mist remover by separating only the casing.

In addition, the present disclosure has an effect in that an airflow for cooling electric or electronic parts is formed between a cavity and a casing by a blower fan, such that by providing a gas sensor module in a space between the cavity and the casing, air and gas discharged from a cooking chamber may be mixed, and the gas discharged from the cooking chamber may be cooled effectively, and then supplied to an oil mist remover.

The present disclosure has an effect in that an image sensor configured to capture an image of the interior of a cavity is provided on an outer portion of a cavity, and the image of the interior of the cavity is acquired through a camera hole formed in the cavity, and the camera hole is covered by a window disposed inside the cavity, such that the image sensor is disposed away from the center of the cavity, and an air gap is formed by the window disposed therein, thereby reducing heat transferred to the image sensor, and improving reliability of the image sensor.

In addition, the present disclosure has an effect in that by cooling an imaging module using air supplied by a blower fan that cools electric or electronic parts mounted on an upper surface of a cavity, such that there is no need for a separate fan to cool the imaging module.

In addition, the present disclosure has an effect in that by guiding air, supplied by a blower fan that cools electric or electronic parts mounted on an upper surface of a cavity, to an imaging module through an air guide, it is possible to effectively cool the imaging module.

In addition, the present disclosure has an effect in that an outlet of an air guide has a smaller cross-sectional area than an inlet of the air guide, thereby increasing the flow velocity and flow rate of air supplied to the imaging module by a blower fan, and cooling the imaging module more effectively.

In addition, the present disclosure has an effect in that an air channel of an air guide is defined together with an upper surface of a cavity and/or one surface of a casing, such that a portion of the cavity and/or a portion of the casing are shared during manufacture of the air guide, thereby reducing the manufacturing cost of the air guide.

In addition, the present disclosure has an effect in that by providing an optical heater installed on an upper surface of a cavity, a microwave module configured to generate microwaves, a convection module installed on a rear surface of the cavity, and a lower heater installed on a bottom surface of the cavity, a cooking apparatus may perform grilling without flipping food and may automatically perform cooking according to the type and weight of food.

## Claims

1. A cooking apparatus comprising:
a cavity defining a cooking chamber therein;
a heater unit configured to generate heat to be supplied to the cooking chamber;
a casing covering at least a portion of the cavity to define a space between the cavity and the casing; and
a gas sensing module mounted in the space between the cavity and the casing and configured to sense gas generated in the cooking chamber,
wherein the cavity further comprises an exhaust portion for exhausting the gas in the cooking chamber to an outside of the cavity.

2. The cooking apparatus of claim 1, wherein the space between the cavity and the casing comprises:
an upper flow space between an upper surface of the cavity and the casing;
a rear flow space between a rear surface of the cavity and the casing; and
a lateral flow space between a lateral surface of the cavity and the casing.

3. The cooking apparatus of claim 2, wherein the gas sensing module is disposed in the lateral flow space.

4. The cooking apparatus of claim 2, wherein the gas sensing module is disposed in the upper flow space.

5. The cooking apparatus of any one of the claims 1 to 4, wherein the gas sensing module comprises:
an oil mist remover configured to filter oil mist contained in gas discharged from the exhaust portion; and
a gas sensor unit configured to detect a type and concentration of gas discharged from the oil mist remover.

6. The cooking apparatus of claim 5, wherein the oil mist remover comprises:
an oil mist removal chamber defining a gas flow space therein in which the gas discharged from the exhaust portion flows, and including a plurality of partition walls that reduce velocity and temperature of the gas flowing therein;
a first gas inlet through which the gas discharged from the exhaust portion flows into the oil mist removal chamber; and
a first gas outlet through which gas is discharged after oil mist is filtered from the gas in the oil mist removal chamber.

7. The cooking apparatus of claim 6, wherein the oil mist removal chamber comprises:
an oil mist chamber body having an opening formed in an upper portion, defining the gas flow space therein, and having the first gas outlet formed in one side thereof; and
an oil mist chamber cover covering the opening of the oil mist chamber body,
wherein the first gas inlet is formed in the oil mist chamber cover.

8. The cooking apparatus of claim 5, wherein the gas sensor unit comprises:
a sensing chamber defining a sensing space therein in which the gas discharged from the oil mist remover flows;
a second gas inlet through which the gas discharged from the oil mist remover flows into the sensing chamber;
a second gas outlet through which the gas in the sensing chamber is discharged; and
a gas sensor mounted in the sensing space and configured to sense the gas flowing in the sensing space.

9. The cooking apparatus of claim 8, wherein the sensing chamber comprises:
a sensing chamber body having an opening formed in an upper portion, defining the sensing space therein, and having the first gas outlet formed in one side thereof and the second gas outlet formed in an opposite side thereof; and
a sensing chamber cover covering the opening of the sensing chamber body.

10. The cooking apparatus of claim 5, wherein the gas sensing module further comprises a gas pump configured to pump the gas discharged from the oil mist remover and to provide the gas.
